(19)

Europäisches
Patentamt
European
Patent Office
Office européen
des brevets

(11) **EP 3 564 268 A1**

(12) **EUROPEAN PATENT APPLICATION**
published in accordance with Art. 153(4) EPC

(43) Date of publication:
06.11.2019 Bulletin 2019/45

(21) Application number: 17887358.4

(22) Date of filing: 25.12.2017

(51) Int Cl.:
$C08B\ 1/00$ (2006.01)         $C08J\ 3/12$ (2006.01)
$C08K\ 5/092$ (2006.01)      $C08K\ 5/54$ (2006.01)
$C08L\ 1/02$ (2006.01)        $C08L\ 23/26$ (2006.01)
$C08L\ 101/00$ (2006.01)

(86) International application number:
PCT/JP2017/046413

(87) International publication number:
WO 2018/123959 (05.07.2018 Gazette 2018/27)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: 27.12.2016 JP 2016253929
27.12.2016 JP 2016253931

(71) Applicant: Kao Corporation
Chuo-Ku
Tokyo 103-8210 (JP)

(72) Inventors:
• **WADA, Tomoya**
Wakayama-shi,
Wakayama 640-8580 (JP)
• **OHSAKI, Kazutomo**
Wakayama-shi,
Wakayama 640-8580 (JP)

• **YAMADA, Kohei**
Wakayama-shi,
Wakayama 640-8580 (JP)
• **OHSAKI, Kouji**
Wakayama-shi,
Wakayama 640-8580 (JP)
• **KAMIMURA, Shigehisa**
Wakayama-shi,
Wakayama 640-8580 (JP)
• **NOJIRI, Naoki**
Wakayama-shi,
Wakayama 640-8580 (JP)
• **KISHIMOTO, Hiroaki**
Wakayama-shi,
Wakayama 640-8580 (JP)

(74) Representative: Hoffmann Eitle
Patent- und Rechtsanwälte PartmbB
Arabellastraße 30
81925 München (DE)

(54) **METHOD FOR PRODUCING LOW CRYSTALLINITY CELLULOSE, AND RESIN COMPOSITION**

(57) The present invention relates to a method for producing a cellulose-containing powder having a cellulose I crystallinity index of -20% or more and less than 50%, including adding, to 100 parts by mass of cellulose-containing raw materials having a cellulose I crystallinity index of 10% or more and less than 100%, 0.1 parts by mass or more and 100 parts by mass or less of one or more additives selected from the group consisting of (A) high-molecular weight compounds having acid anhydrides, (B) low-molecular weight compounds having acid anhydrides, and (C) silane coupling agents; and subjecting a mixture to a milling treatment in a dry state. The cellulose-containing powder obtainable by the method of the present invention can be suitably used in various industrial applications such as daily sundries, household electric appliance parts, and automobile parts.

**EP 3 564 268 A1**

**EP 3 564 268 A1**

**Description**

FIELD OF THE INVENTION

The present invention relates to a method for producing a low-crystallinity cellulose, and a cellulose-containing powder. Further, the present invention relates to a resin composition. More specifically, the present invention relates to a resin composition which can be suitably used as daily sundries, household electric appliance parts, automobile parts, and the like, and a method for producing the same, and a molded article of the resin composition and a method for producing the same.

BACKGROUND OF THE INVENTION

Conventionally, plastic materials derived from petroleum which is a limited resource have been widely used. However, in the recent years, the techniques that are environmentally friendly have been spotlighted. Under such technical background, materials using cellulose fibers which are biomass that are present abundantly in nature have been remarked.
For example, Patent Publication 1 has reported that a molded article of a composition in which a cellulose having a crystallinity of less than 50% is blended with a polyolefin resin and/or a styrenic resin shows some excellent effects that the molded article satisfies both the strength and the flexibility, and further has excellent impact resistance. Moreover, the patent publication discloses that the cellulose usable herein is prepared in a manner that a crystallization is reduced to less than 50% by a milling treatment. The patent publication also discloses that a cellulose with the reduced crystallization is subjected to treatment to a smaller particle size by adding a milling aid and carrying out a milling treatment, so that its average particle size would be 30 $\mu$m or less, and used.
In addition, Patent Publication 2 discloses a method for producing cellulose particles including adding from 0.1 to 100 parts by mass of a specified milling aid based on 100 parts by mass of low-crystallinity cellulose raw materials having a cellulose I crystallinity of 33% or less, and subjecting a mixture to a milling treatment in a dry state to give cellulose particles having an average particle size of preferably 50 $\mu$m or less. On the other hand, Patent Publication 3 discloses a method for producing a low-crystallinity cellulose, including, in a case where cellulose-containing raw materials having a cellulose I crystallinity exceeding 33% are used, a cellulose content in the remaining components excluding water from the cellulose-containing raw materials is 20% by mass or more, the cellulose-containing raw materials are treated with a mill with a milling aid, thereby producing a cellulose having an average particle size of from 10 to 200 $\mu$m.
Further, Patent Publication 4 discloses that when flat cellulose particles or fibrous fine cellulose is added to various matrices (for example, a thermoplastic resin), shape effects thereof can be effectively utilized by orienting the flat cellulose particles or fibrous fine cellulose, and further that a component for improving physical properties is added or the flat cellulose particles or the fibrous fine cellulose is subjected to a surface treatment with a component for improving physical properties, whereby physical properties of the composite, for example, dimensional stability, vibration-damping and soundproof properties, gas-barrier properties, abrasion resistance, heat resistance, heat insulation property, surface slidability, electric insulation properties, etc. are excellent.
Patent Publication 1: Japanese Patent Laid-Open No. 2011-137094
Patent Publication 2: Japanese Patent Laid-Open No. 2010-155982
Patent Publication 3: Japanese Patent Laid-Open No. 2010-37526
Patent Publication 4: Japanese Patent Laid-Open No. 2004-231796

SUMMARY OF THE INVENTION

The present invention relates to the following [1] to [10]:

[1] A method for producing a cellulose-containing powder having a cellulose I crystallinity index of -20% or more and less than 50%, including adding, to 100 parts by mass of cellulose-containing raw materials having a cellulose I crystallinity index of 10% or more and less than 100%, 0.1 parts by mass or more and 100 parts by mass or less of one or more additives selected from the group consisting of the following (A), (B), and (C):

(A) high-molecular weight compounds having acid anhydrides,
(B) low-molecular weight compounds having acid anhydrides, and
(C) silane coupling agents; and

subjecting a mixture to a milling treatment in a dry state.

[2] A cellulose-containing powder having a cellulose I crystallinity index of -20% or more and less than 50%, wherein the cellulose-containing powder contains, based on 100 parts by mass of cellulose-containing raw materials, 0.1 parts by mass or more and 100 parts by mass or less of one or more additives selected from the group consisting of the following (A), (B), and (C):

(A) high-molecular weight compounds having acid anhydrides,
(B) low-molecular weight compounds having acid anhydrides, and
(C) silane coupling agents.

[3] A thermoplastic resin composition containing
a thermoplastic resin (a), and
a cellulose composite (b), which is a mixed and milled product of a polymer having a cellulose-affinity site and a cellulose, the cellulose composite having a cellulose I crystallinity index of -20% or more and less than 50%.

[4] The resin composition according to the above [3], wherein the cellulose composite (b) is a cellulose-containing powder produced by a method as defined in the above [1].

[5] The resin composition according to the above [3], wherein the cellulose composite (b) is a cellulose-containing powder as defined in the above [2].

[6] A molded article containing a resin composition as defined in any one of the above [3] to [5].

[7] A method for producing a molded article, including processing a resin composition as defined in any one of the above [3] to [5] to produce a molded article.

[8] A method for producing a resin composition, including blending a thermoplastic resin (a), and
a cellulose composite (b) having a cellulose I crystallinity index of -20% or more and less than 50%, in which

a polymer having a cellulose affinity site and
a cellulose
are previously
are previously subjected to a milling treatment.

[9] The method according to the above [8], wherein the cellulose composite (b) is a cellulose-containing powder produced by a method as defined in the above [1].

[10] The method according to the above [8], wherein the cellulose composite (b) is a cellulose-containing powder as defined in the above [2].

## BRIEF DESCRIPTION OF THE DRAWINGS

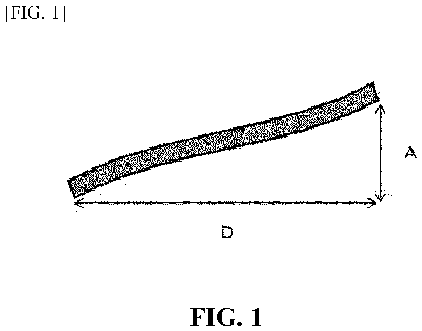

FIG. 1 is a schematic view showing a maximum height and a diagonal length of a molded article.

## DETAILED DESCRIPTION OF THE INVENTION

However, in the recent years, it has been expected to use low-crystallinity celluloses in even wider applications, so that techniques of conveniently preparing those having even more excellent physical properties have been desired.

The present invention relates to a method for conveniently preparing a cellulose-containing powder which is a low-crystallinity cellulose capable of providing a resin composition satisfying both the rigidity and the toughness when blended with a resin, and a cellulose-containing powder.

Further, the present invention relates to a resin composition satisfying both the toughness and the rigidity, and a method for producing the same, a molded article of the resin composition, and a method for producing the same.

The low-crystallinity cellulose obtained by the present invention exhibits an excellent effect that a resin composition satisfying both the rigidity and the toughness when blended with a resin can be provided.

Further, the resin composition of the present invention exhibits an excellent effect of satisfying both the toughness and the rigidity. Furthermore, the resin composition of the present invention exhibits some excellent effects in weld strength, impact resistance at low temperatures, and inhibition of bowing.

Invention 1. Method for Producing Cellulose-Containing Powder and Cellulose-Containing Powder of the Present Invention

In celluloses, the higher the crystallinity, the higher the strength, but in a low-crystallinity cellulose, amorphous parts are present in greater amounts so that the existing proportion of hydrogen bonds is reduced, so that toughness is also excellent while having excellent strength. The low-crystallinity cellulose as mentioned above can be produced, as described in Patent Publications 1 to 3 mentioned above, by subjecting raw material celluloses to a milling treatment. In the invention 1, it has been found that a low-crystallinity cellulose can be conveniently prepared by allowing specified additives to be present during the milling treatment, which can give the rigidity and the toughness when blended with a resin. As the component to be copresent during the milling treatment, a milling aid or the like in the above Patent Publications 1 to 3 has been already known. In the invention 1, by using components that are different from conventional milling aids for cellulose such as (A) high-molecular weight compounds having acid anhydrides, (B) low-molecular weight compounds having acid anhydrides, and (C) silane coupling agents, although the detailed reasons therefor are not fully elucidated, they are assumed to be as follows. Since the additive and the cellulose have good affinity, the additive is more likely to penetrate into the internal of the crystals of the cellulose, so that the milling power is more easily transmitted, thereby crushing the structure even from the internal of the crystals of the cellulose. However, these assumptions do not intend to limit the present invention thereto. Here, with regard to the invention 1, the crystallinity of the cellulose refers to a cellulose I crystallinity index calculated according to Segal method from diffraction intensity values according to X-ray diffraction method, and specifically, the crystallinity is defined as follows.

[Confirmation of Crystal Structure of Cellulose]

The crystal structure of the cellulose is confirmed by a measurement using "MiniFlex600" manufactured by Rigaku under the following conditions. The measurement conditions are: X-ray source: Cu/K$\alpha$-radiation, tube voltage: 30kv, tube current: 15mA, measurement range: angle of diffraction 2$\theta$ = 5° to 35°, scanning speed of X-rays: 40°/min. A sample for the measurement is prepared by compressing a pellet of area of 320 mm$^2$ × a thickness of 1 mm. Also, the crystallinity of the cellulose I crystal structure is obtained by calculating X-ray diffraction intensity based on the following formula (A):

$$\text{Cellulose I Crystallinity Index (\%)} = [(I22.6\text{-}I18.5)/I22.6] \times 100$$

$$(A)$$

wherein I22.6 is a diffraction intensity of a lattice face (002 face)(angle of diffraction 2$\theta$ = 22.6°), and I18.5 is a diffraction intensity of an amorphous portion (angle of diffraction 2$\theta$ = 18.5°), in X-ray diffraction.

The method for producing a cellulose of the invention 1 has the feature of including adding, to 100 parts by mass of cellulose-containing raw materials having a cellulose I crystallinity index of 10% or more and less than 100%, 0.1 parts by mass or more and 100 parts by mass or less of one or more additives selected from the group consisting of (A), (B), and (C), which will be described later, and subjecting a mixture to a milling treatment in a dry state. According to the method, a cellulose-containing powder having a cellulose I crystallinity index of -20% or more and less than 50% is obtained. In the invention 1, the cellulose-containing powder is described as a low-crystallinity cellulose.

[Cellulose-Containing Raw Materials]

The cellulose-containing raw materials usable in the invention 1 are not particularly limited, so long as the raw materials satisfy a cellulose I crystallinity index of 10% or more and less than 100%. The crystallinity index is preferably 20% or more, more preferably 30% or more, even more preferably 40% or more, even more preferably 50% or more, and even more preferably 60% or more, from the viewpoint of miscibility of the cellulose and the additive. Those having a crystallinity index of, for example, 50% or more may be used, from the viewpoint of being inexpensively available. Specifically, the cellulose-containing raw materials include woody raw materials (needle-leaf trees and broad-leaf trees); grassy raw materials (plant raw materials of Gramineae, Malvaceae, and Fabaceae, non-woody raw materials of plants of Palmae); pulps (cotton linter pulps obtained from fibers surrounding the cottonseeds, etc.); and papers (newspapers, corrugated cardboards, magazines, high-quality paper, etc.).

In the invention 1, since a low-crystallinity cellulose can be obtained conveniently by a milling treatment in the presence of the additives described later, without going through complicated multi-steps, the sizes and shapes of the cellulose-containing raw materials are not particularly limited. For example, cellulose-containing raw materials in fibrous, powdery, spherical, chip-like, or flaky form can be used. In addition, it may be a mixture thereof. Alternatively, cellulose-containing raw materials may be optionally sized to the above shape utilizing a cutting machine such as a shredder. Specifically, cellulose-containing raw materials include those having the shapes mentioned above having the sizes in which one side is included within the range of from 0.1 to 70 mm, preferably from 0.5 to 70 mm, more preferably from 1 to 50 mm, and even more preferably from 1 to 30 mm. Here, the size of the cellulose-containing raw materials can be measured with a slide caliper.

The components of the cellulose-containing raw materials are not particularly limited. For example, the cellulose content in the raw materials includes preferably 30% by mass or more, more preferably 50 by mass or more, and even more preferably 70 by mass or more. In addition, the upper limit includes 100% by mass, and 99% by mass or less, from the viewpoint of availability. Here, the cellulose content in the cellulose-based raw materials refers to a cellulose content in the remainder component after removing water in the cellulose-based raw materials.

In addition, the water content in the cellulose-containing raw materials includes, but not particularly limited to, preferably 0.01% by mass or more, more preferably 0.1% by mass or more, even more preferably 0.5% by mass or more, even more preferably 1.0% by mass or more, even more preferably 1.5% by mass or more, and even more preferably 2.0% by mass or more, from the viewpoint of availability and costs. In addition, one having a water content of preferably 50% by mass or less, more preferably 40% by mass or less, even more preferably 30% by mass or less, and even more preferably 20% by mass or less, can be used, from the viewpoint of handling property.

The cellulose-containing raw materials usable in the invention 1 may be subjected to a drying treatment. The treatment method therefor is not limited, and a known drying method may be properly selected, including, for example, hot-air heat transfer drying method, conductive heat transfer drying method, dehumidifying air-drying method, cool air drying method, microwave drying method, infrared ray drying method, sunlight drying method, vacuum-drying method, freeze-drying method, and the like. These drying methods may be used alone or in a combination of two or more kinds, and a drying apparatus can be properly selected in accordance with a drying method. In addition, the drying treatment can be carried out in a batch treatment or a continuous treatment.

The temperature in the drying treatment cannot be unconditionally determined because the temperature depends upon drying means, drying time, and the like. The temperature is preferably 10°C or higher, more preferably 50°C or higher, and even more preferably 60°C or higher, and preferably 250°C or lower, and more preferably 150°C or lower. As the treatment time, the lower limit is preferably 0.01 hr or more, and more preferably 0.02 hr or more, and the upper limit is preferably 2 hr or less, and more preferably 1 hr or less. The drying treatment may be optionally carried out under a reduced pressure, and the pressure includes from 1 to 120 kPa or so.

The water content of the cellulose-containing raw materials after the drying treatment is preferably 4.5% by mass or less, more preferably 4.0% by mass or less, even more preferably 3.5% by mass or less, and even more preferably 3.0% by mass or less. Even in the milling treatment in the presence of the additive, so long as the water content is as defined above, the treatment can be favorably carried out without forming lumpy mass.

Here, the above drying treatment does not affect the crystallinity of the cellulose-containing raw materials, so that the crystallinity index of the cellulose-containing raw materials after the drying treatment has the same level of crystallinity index as a crystallinity index before the treatment.

[Additives]

In the invention 1, one or more kinds of additives selected from the group consisting of

(A) high-molecular weight compounds having acid anhydrides,
(B) low-molecular weight compounds having acid anhydrides, and
(C) silane coupling agents

are used. The combinations in a case where two or more kinds are used may be two or more kinds out of (A), two or more kinds out of (B), or two or more kinds out of (C), or alternatively may be any of a combination of (A) and (B), a combination of (B) and (C), a combination of (A) and (C), and a combination of (A), (B), and (C). Among them, the combination of (A) and (C) is preferred, from the viewpoint of affinity with the resin when blended with the resin, in addition to affinity with the cellulose.

(A) High-Molecular Weight Compounds Having Acid Anhydrides

The acid anhydride in the compound (A) includes, but not particularly limited to, for example, maleic anhydride, succinic anhydride, glutaric anhydride, and the like.

The high molecular weight compound in the compound (A) includes resins such as polyolefin-based resins, acrylic resins, and styrenic resins, and the polyolefin-based resins are preferred, from the viewpoint of affinity with the resin to be blended.

The polyolefin-based resin includes ethylene-based polymers [high-density polyethylenes, medium-density polyethylenes, low-density polyethylenes, copolymers formed between ethylene and one or more other vinyl compounds (e.g., $\alpha$-olefin, vinyl acetate, methacrylic acid, acrylic acid, etc.), and the like], propylene-based polymers [polypropylenes, copolymers formed between propylene and one or more other vinyl compounds, and the like], ethylene-propylene copolymers, polybutene, poly-4-methylpentene-1, and the like, and the propylene-based polymers are preferred.

Specific examples of the compound (A) include, for example, maleic anhydride-modified polyolefins, which more specifically include maleic anhydride-modified polypropylenes.

The compound (A) may be prepared in accordance with a known method, or a commercially available product may be used. Preferred commercially available products include, for example, "Umex," a polypropylene having maleic anhydride, manufactured by Sanyo Chemical Industries, Ltd., "OREVAC G," a polypropylene having maleic anhydride, manufactured by ARKEMA, "LOTADER," a polyolefin-based resin having an acid anhydride, manufactured by ARKEMA, "BONDYNE," a polyolefin-based resin having an acid anhydride, manufactured by SUMITOMO CHEMICAL CO., LTD., and the like.

The weight-average molecular weight Mw of the compound (A) is preferably 1,000 or more, more preferably 5,000 or more, even more preferably 10,000 or more, and even more preferably 20,000 or more, from the viewpoint of affinity with the cellulose. In addition, the weight-average molecular weight is preferably 150,000 or less, more preferably 140,000 or less, and even more preferably 130,000 or less, from the viewpoint of milling property. The weight-average molecular weight of the high-molecular weight compound as used herein can be measured in accordance with the method described in Examples set forth hereinbelow.

In addition, it is preferable that the compound (A) has a melting point of preferably 250°C or lower, more preferably 200°C or lower, even more preferably 180°C or lower, and even more preferably 170°C or lower, from the viewpoint of inhibiting the degradation of the cellulose during the formation of composites with the resin. The lower limit is not particularly limited, and is, for example, 100°C or so. The melting point as used herein can be measured in accordance with the method described in Examples set forth hereinbelow.

(B) Low-Molecular Weight Compounds Having Acid Anhydrides

The acid anhydrides in the compound (B) are not particularly limited, and include the same ones as those for the acid anhydrides in the compound (A).

The low-molecular weight moieties in the compound (B) include hydrocarbon groups.

The hydrocarbon group includes, for example, chained saturated hydrocarbon groups, chained unsaturated hydrocarbon groups, cyclic saturated hydrocarbon groups, and aromatic hydrocarbon groups.

The chained saturated hydrocarbon group may be linear or branched. The number of carbon atoms of the chained saturated hydrocarbon group is preferably 1 or more, more preferably 3 or more, even more preferably 5 or more, even more preferably 10 or more, and even more preferably 15 or more, from the viewpoint of milling property. In addition, the number of carbon atoms is preferably 30 or less, more preferably 24 or less, even more preferably 20 or less, and still even more preferably 18 or less, from the viewpoint of reactivities with the cellulose.

Specific examples of the chained saturated hydrocarbon group include, for example, a methyl group, an ethyl group, a propyl group, an isopropyl group, a butyl group, a sec-butyl group, a tert-butyl group, an isobutyl group, a pentyl group, a tert-pentyl group, an isopentyl group, a hexyl group, an isohexyl group, a heptyl group, an octyl group, a 2-ethylhexyl group, a nonyl group, a decyl group, a dodecyl group, a tridecyl group, a tetradecyl group, an octadecyl group, a docosyl group, an octacosanyl group, and the like. Among them, preferred are a propyl group, an isopropyl group, a butyl group, a sec-butyl group, a tert-butyl group, an isobutyl group, a pentyl group, a tert-pentyl group, an isopentyl group, a hexyl group, an isohexyl group, a heptyl group, an octyl group, a 2-ethylhexyl group, a nonyl group, a decyl group, a dodecyl group, a tridecyl group, a tetradecyl group, an octadecyl group, a docosyl group, and an octacosanyl group, and more preferred are a pentyl group, a tert-pentyl group, an isopentyl group, a hexyl group, an isohexyl group, a heptyl group, an octyl group, a 2-ethylhexyl group, a nonyl group, a decyl group, a dodecyl group, a tridecyl group, a tetradecyl group, and an octadecyl group.

The chained unsaturated hydrocarbon group may be linear or branched. The number of carbon atoms of the chained unsaturated hydrocarbon group is preferably 2 or more, more preferably 3 or more, even more preferably 5 or more, and still even more preferably 10 or more, from the viewpoint of milling property. In addition, the number of carbon atoms is preferably 30 or less, more preferably 24 or less, even more preferably 20 or less, and still even more preferably 18 or less, from the viewpoint of reactivities with the cellulose.

Specific examples of the chained unsaturated hydrocarbon group include, for example, an ethenyl group, a propenyl group, a butenyl group, an isobutenyl group, an isoprenyl group, a pentenyl group, a hexenyl group, a heptenyl group, an octenyl group, a nonenyl group, a decenyl group, a dodecenyl group, a tridecenyl group, a tetradecenyl group, and an octadecenyl group. Among them, preferred are an isoprenyl group, a pentenyl group, a hexenyl group, a heptenyl group, an octenyl group, a nonenyl group, a decenyl group, a dodecenyl group, a tridecenyl group, a tetradecenyl group, and an octadecenyl group, and more preferred are a decenyl group, a dodecenyl group, a tridecenyl group, a tetradecenyl group, and an octadecenyl group.

The number of carbon atoms of the chained unsaturated hydrocarbon group is preferably 3 or more, more preferably 4 or more, and even more preferably 5 or more, from the viewpoint of milling property. In addition, the number of carbon atoms is preferably 20 or less, more preferably 16 or less, even more preferably 12 or less, and still even more preferably 8 or less, from the viewpoint of reactivities with the cellulose.

Specific examples of the cyclic saturated hydrocarbon group include, for example, a cyclopropyl group, a cyclobutyl group, a cyclopentyl group, a cyclohexyl group, a cycloheptyl group, a cyclooctyl group, a cyclononyl group, a cyclodecyl group, a cyclododecyl group, a cyclotridecyl group, a cyclotetradecyl group, a cyclooctadecyl group, and the like. Among them, preferred are a cyclopropyl group, a cyclobutyl group, a cyclopentyl group, a cyclohexyl group, a cycloheptyl group, a cyclooctyl group, a cyclononyl group, a cyclodecyl group, and a cyclododecyl group, and more preferred are a cyclopentyl group, a cyclohexyl group, a cycloheptyl group, and a cyclooctyl group.

The aromatic hydrocarbon groups are, for example, selected from the group consisting of aryl groups and aralkyl groups. The aryl groups and the aralkyl groups may be those in which the aromatic ring or rings themselves are substituted or unsubstituted.

A total number of carbon atoms of the above aryl group may be 6 or more, and a total number of carbon atoms is preferably 24 or less, more preferably 20 or less, even more preferably 14 or less, even more preferably 12 or less, and even more preferably 10 or less, from the viewpoint of milling property.

A total number of carbon atoms of the above aralkyl group is 7 or more, and a total number of carbon atoms is preferably 8 or more, from the viewpoint of milling property, and a total number of carbon atoms is preferably 24 or less, more preferably 20 or less, even more preferably 14 or less, even more preferably 13 or less, and even more preferably 11 or less, from the viewpoint of reactivities with the cellulose.

The aryl group includes, for example, a phenyl group, a naphthyl group, an anthryl group, a phenanthryl group, a biphenyl group, a triphenyl group, a terphenyl group, and the like.

The aralkyl group includes, for example, a benzyl group, a phenethyl group, a phenylpropyl group, a phenylpentyl group, a phenylhexyl group, a phenylheptyl group, a phenyloctyl group, and the like.

The hydrocarbon groups listed above may have a substituent, and, for example, those hydrocarbon groups in which a total number of carbon atoms of the overall hydrocarbon group is within the range defined above are preferred. The substituent includes, for example, alkoxy groups having from 1 to 6 carbon atoms, such as a methoxy group, an ethoxy group, a propoxy group, an isopropoxy group, a butoxy group, an isobutoxy group, a sec-butoxy group, a tert-butoxy group, a pentyloxy group, an isopentyloxy group, and a hexyloxy group; alkoxy-carbonyl groups, of which alkoxy group has from 1 to 6 carbon atoms, such as a methoxycarbonyl group, an ethoxycarbonyl group, a propoxycarbonyl group, an isopropoxycarbonyl group, a butoxycarbonyl group, an isobutoxycarbonyl group, a sec-butoxycarbonyl group, a tert-butoxycarbonyl group, a pentyloxycarbonyl group, and an isopentyloxycarbonyl group; halogen atoms such as a fluorine atom, a chlorine atom, a bromine atom, and an iodine atom; acyl groups having from 1 to 6 carbon atoms, such as an acetyl group and a propionyl group; aralkyl groups; aralkyloxy groups; alkylamino groups having from 1 to 6 carbon atoms; and dialkylamino groups of which alkyl group has from 1 to 6 carbon atoms. Here, the hydrocarbon groups themselves listed above are bonded as a substituent. These hydrocarbon groups may be introduced, alone or in a given proportion of two or more kinds.

Specific examples of the compound (B) include, for example, alkylsuccinic or alkenylsuccinic anhydrides, such as dodecenylsuccinic anhydride and hexadecenylsuccinic anhydride; and alkylglutaric or alkenylglutaric anhydrides such as hexadecylglutaric anhydride and octadecylglutaric anhydride. These may be prepared in accordance with known methods, or commercially available products may be used. The number of carbon atoms of the alkyl or alkenyl moiety is, as mentioned above, preferably 2 or more, more preferably 3 or more, even more preferably 5 or more, and still even more preferably 10 or more, from the viewpoint of milling property, and the number of carbon atoms is preferably 30 or less, more preferably 24 or less, even more preferably 20 or less, and still even more preferably 18 or less, from the viewpoint of reactivities with the cellulose.

The molecular weight of the compound (B) is preferably 50 or more, more preferably 100 or more, and even more preferably 200 or more, from the viewpoint of milling property. In addition, the molecular weight is preferably 600 or less, more preferably 500 or less, and even more preferably 400 or less, from the viewpoint of affinity with the cellulose. The molecular weight of the low-molecular weight compound as used herein can be calculated based on the atomic amounts of the constituting atoms.

(C) Silane Coupling Agents

The compound (C) includes, for example, coupling agents such as isocyanate silanes, amino silanes, mercapto silanes, epoxy silanes, vinyl silanes, methacrylic silanes, and epoxy silanes. Among them, coupling agents such as isocyanate silanes, amino silanes, mercapto silanes, and epoxy silanes are preferred, from the viewpoint of reactivities with the cellulose.

The isocyanate silane includes, for example, 3-isocyanate propylmethoxysilane, 3-isocyanate propyltriethoxysilane, tris-(3-trimethoxysilylpropyl) isocyanurate, and the like.

The amino silane includes, for example, 3-aminopropyltriethoxysilane, n-β(aminoethyl)γ-aminopropyltriethoxysilane, and the like.

The mercapto silane includes, for example, 3-mercaptopropyltrimethoxysilane, and the like.

The epoxy silane includes 2-(3,4-epoxycylohexyl)ethyltrimethoxysilane, 3-glycidoxypropyltrimethoxysilane, 3-glycidoxypropylmethyldiethoxysilane, and the like.

The amount of the additive used, based on 100 parts by mass of the cellulose-containing raw materials, is 0.1 parts by mass or more and 100 parts by mass or less, from the viewpoint of satisfying both the rigidity and the toughness when blended with the resin, and the amount used is preferably 0.5 parts by mass or more, more preferably 1 part by mass or more, more preferably 3 parts by mass or more, and even more preferably 5 parts by mass or more, from the viewpoint of increasing miscibility of the additives and the cellulose, thereby improving the rigidity when blended with the resin. Also, the amount used is preferably 75 parts by mass or less, more preferably 50 parts by mass or less, even more preferably 25 parts by mass or less, and still even more preferably 20 parts by mass or less, from the viewpoint of reducing the crystallinity, thereby improving the toughness when blended with the resin.

The amount of the additive used, based on 100 parts by mass of the cellulose-containing raw materials, is 0.1 parts by mass or more and 100 parts by mass or less, preferably 0.5 parts by mass or more and 75 parts by mass or less, more preferably 0.5 parts by mass or more and 50 parts by mass or less, even more preferably 1 part by mass or more and 25 parts by mass or less, even more preferably 1 part by mass or more and 20 parts by mass or less, even more preferably 3 parts by mass or more and 20 parts by mass or less, and even more preferably 5 parts by mass or more and 20 parts by mass or less, from the viewpoint of satisfying both the rigidity and the toughness when blended with the resin,

When two or more kinds of additives are used, the amount used means a total amount.

[Milling Treatment]

The milling treatment is carried out in a dry state using the cellulose-containing raw materials and the additives mentioned above. In the invention 1, the milling of the cellulose-containing raw materials in the presence of the additives is called "mixing and milling (or mixed and milled)."

The mill used in the milling treatment in a dry state is preferably a media mill. The media mills are vessel driving mills and media agitation mills. The vessel driving mills include tumbling mills, vibration mills, planetary mills, centrifugal fluidized bed mills, and the like. In addition, the media agitating mills include tower mills such as tower mills; agitation tank mills such as attritors, aquamizers, and sand grinders; flow tank-containing mills such as Visco mill and pearl mill; flow-tube-containing mills; annular mills such as co-ball mill; continuous dynamic mills, and the like. In these mills, the crystallinity of the cellulose obtained can be controlled by properly adjusting the peripheral speed of the rotor, the feeding speed of a sample, agitation time, and the like.

In addition, the materials which can be used for the medium include, but not particularly limited to, for example, iron, stainless steel, alumina, zirconia, silicon carbide, silicon nitride, glass, and the like. The shape of the medium includes, but not particularly limited, balls, rods, tubes, and the like. Here, the word rod is a rod-shaped medium, and one of which cross-section is a polygonal such as quadrangular or hexagonal, circular or elliptic shape or the like can be used.

The filling ratio of the media differs in a more preferred filling ratio depending upon the kinds of machines of the mills and the shapes of the media, and in the case of, for example, a rod, the filling ratio is preferably 10% or more, and more preferably 15% or more, and preferably 70% or less, and more preferably 60% or less. When the filling ratio is within this range, the contact frequencies between the cellulose-containing raw materials and the rod are improved, whereby the milling efficiency can be improved. Here, the filling ratio refers to an apparent volume of the media based on the volume of the agitation member of the mill. In addition, it is preferable that the rods are used in a plurality, from the viewpoint of increasing contacting frequencies between the cellulose-containing raw materials and the rods, thereby improving milling efficiency.

The treatment time cannot be unconditionally determined because the treatment time depends upon the kinds of the mill and the kinds of media, sizes, filling ratios, and the like, and the treatment time is preferably 0.01 hr or more, more preferably 0.05 hr or more, and even more preferably 0.1 hr or more, from the viewpoint of reducing the crystallinity, and the treatment time is preferably 10 hr or less, more preferably 5 hr or less, even more preferably 2 hr or less, even more preferably 1 hr or less, and still even more preferably 0.5 hr or less, from the viewpoint of productivity. The treatment temperature is, but not particularly limited to, usually from 5° to 250°C or so, from the viewpoint of preventing the degradation due to heat.

The difference in the cellulose I crystallinity index (A) before and after the milling treatment, i.e., Cellulose I Crystallinity Index (A) Before the Milling Treatment - Cellulose I Crystallinity Index (A) After the Milling Treatment, is preferably 30% or more, more preferably 40% or more, and even more preferably 50% or more, from the viewpoint of satisfying both the rigidity and the toughness when blended with the resin. The difference is preferably 120% or less, more preferably 100% or less, and even more preferably 90% or less, from the viewpoint of milling efficiency. From these viewpoints, the difference in the cellulose I crystallinity index (A) before and after the milling treatment, i.e., Cellulose I Crystallinity Index (A) Before the Milling Treatment - Cellulose I Crystallinity Index (A) After the Milling Treatment, is preferably from 30 to 120%, more preferably from 40 to 100%, and even more preferably from 50 to 90%.

According to the above treatment method, strong aggregation of the milled cellulose particles themselves is inhibited, so that a low-crystallinity cellulose can be efficiently and productively produced. In addition, low-crystallinity cellulose raw materials can be treated in a dry state in an inner part of the mill without fusing thereto during the treatment with a mill.

Thus, a cellulose-containing powder in which a crystallinity is reduced, wherein a cellulose I crystallinity index is -20% or more and less than 50% is obtained. The extent of crystallinity reduced cannot be unconditionally determined because it depends upon the conditions of the milling treatment and the raw materials used in the milling treatment. The cellulose I crystallinity index of the cellulose-containing powder obtained is smaller than the cellulose I crystallinity index of the raw materials used in the treatment. The cellulose I crystallinity index of the cellulose-containing powder of which crystallinity is reduced is preferably -20% or more, more preferably -10% or more, and even more preferably 0% or more, from the viewpoint of improving the rigidity when blended with the resin, and the crystallinity index is preferably 50% or less, more preferably 40% or less, even more preferably 30% or less, and still even more preferably 25% or less, from the viewpoint of improving the toughness when blended with the resin. Also, the crystallinity index is preferably -20% or more and 50% or less, more preferably -10% or more and 40% or less, even more preferably 0% or more and 30% or less, and still even more preferably 0% or more and 25% or less, from the viewpoint of satisfying both the rigidity and the toughness when blended with the resin.

In addition, the cellulose-containing powder obtained preferably has a sharp particle size distribution, from the viewpoint of satisfying both the rigidity and the toughness when blended with the resin. The content of the particles having particle sizes exceeding 250 $\mu$m (also referred to "proportion of particles"), of the entire powders (of the cellulose-containing powder obtained), is preferably 50% by volume or less, more preferably 45% by volume or less, even more preferably 40% by volume or less, even more preferably 30% by volume or less, and even more preferably 20% by volume or less, from the viewpoint of improving the rigidity when blended with the resin. The content is preferably 0.1% by volume or more, and more preferably 1% by volume or more, from the viewpoint of production efficiency. Therefore, the content of the particles having particle sizes exceeding 250 $\mu$m of the entire powders is preferably from 0.1 to 50% by volume, more preferably from 0.1 to 45% by volume, even more preferably from 0.1 to 40% by volume, even more preferably from 0.1 to 30% by volume, more preferably from 0.1 to 20 % by volume, and even more preferably from 1 to 20% by volume.

In addition, the content of the particles having particle sizes of 32 $\mu$m or less, of the entire powders, is preferably 30% by volume or less, more preferably 25% by volume or less, even more preferably 20% by volume or less, even more preferably 10% by volume or less, and even more preferably 5% by volume or less, from the viewpoint of improving the rigidity when blended with the resin. The content is preferably 0.01% by volume or more, more preferably 0.1% by volume or more, and even more preferably 0.3% by volume or more, from the viewpoint of production efficiency and improvement in the toughness when blended with the resin. Therefore, the content of the particles having particle sizes of 32 $\mu$m or less, of the entire powders, is preferably from 0.01 to 30% by volume, more preferably from 0.01 to 25% by volume, even more preferably from 0.01 to 20% by volume, even more preferably from 0.01 to 10% by volume, even more preferably from 0.01 to 5% by volume, even more preferably from 0.1 to 5% by volume, and even more preferably from 0.3 to 5% by volume.

In addition, the content of the particles having particle sizes of exceeding 32 $\mu$m and 150 $\mu$m or less, of the entire powders, is preferably 40% by volume or more, more preferably 45% by volume or more, and even more preferably 50% by volume or more, from the viewpoint of satisfying both the rigidity and the toughness when blended with the resin. The content is preferably 98% by volume or less, more preferably 95% by volume or less, and even more preferably 90% by volume or less, from the viewpoint of production efficiency. From these viewpoints, the content is preferably from 40 to 98% by volume, more preferably from 45 to 95% by volume, and even more preferably from 50 to 90% by volume.

In addition, the content of the particles having particle sizes of exceeding 32 $\mu$m and 250 $\mu$m or less, of the entire powders, is preferably 40% by volume or more, more preferably 45% by volume or more, even more preferably 50% by volume or more, and even more preferably 60% by volume or more, from the viewpoint of satisfying both the rigidity and the toughness when blended with the resin. The content is preferably 98% by volume or less, more preferably 95% by volume or less, and even more preferably 90% by volume or less, from the viewpoint of production efficiency. From these viewpoints, the content is preferably from 40 to 98% by volume, more preferably from 45 to 95% by volume, even more preferably from 50 to 90% by volume, and even more preferably from 60 to 90% by volume.

The median diameter of the cellulose-containing powder, of the entire powders, is preferably 32 $\mu$m or more, more preferably 50 $\mu$m or more, even more preferably 80 $\mu$m or more, and more preferably 100 $\mu$m or more, from the viewpoint of satisfying both the rigidity and the toughness when blended with the resin. From the same viewpoint, the median diameter is preferably 400 $\mu$m or less, more preferably 300 $\mu$m or less, even more preferably 250 $\mu$m or less, and still even more preferably 200 $\mu$m or less, and the median diameter is preferably from 32 to 400 $\mu$m, more preferably from 50 to 300 $\mu$m, even more preferably from 80 to 250 $\mu$m, and even more preferably from 100 to 200 $\mu$m. The particle size distribution and the median diameter mentioned above can be obtained by the methods described in Examples.

According to the invention 1, a low-crystallinity cellulose containing an additive can be conveniently produced without going through complicated steps.

The cellulose-containing powder of the invention 1 has a cellulose I crystallinity index of -20% or more and less than 50%, and contains, based on 100 parts by mass of the cellulose-containing raw materials, 0.1 parts by mass or more and 100 parts by mass or less of one or more additives selected from the group consisting of the following (A), (B), and (C):

(A) high-molecular weight compounds having acid anhydrides,
(B) low-molecular weight compounds having acid anhydrides, and
(C) silane coupling agents.

It is preferable that the cellulose-containing powder of the invention 1 has a proportion of particles having particle sizes of 32 μm or less, in the entire cellulose-containing powders, of 10% by volume or less. Further, it is preferable that the cellulose-containing powder of the invention 1 has a content of particles having particle sizes of exceeding 32 μm and 150 μm or less of the cellulose-containing powder of 40% by volume or more, of the entire powders.

In the cellulose-containing powder of the invention 1, it is possible to produce the powder, for example, according to the production method of the invention 1 mentioned above, and the details and properties of each component, specific examples of the numerical values, and the numerical ranges are the same as those of the production method of the invention 1 mentioned above.

The low-crystallinity cellulose obtained by the invention 1 and the cellulose-containing powder of the invention 1 can be used as substitutes of celluloses that are conventionally used, which can be suitably used in various applications such as machine tool parts, household electric appliance parts, automobile parts, and tires, by blending with various resins, rubbers, and the like.

The resin blendable with a low-crystalline cellulose obtained by the invention 1 and a cellulose-containing powder of the invention 1 is preferably one or more members selected from polyethylenes (PE resins), polypropylenes (PP resins), polystyrenes (PS resins), polyvinyl acetates (PVAc resins), polyvinyl chlorides (PVC resins), polyvinylidene chlorides (PVDC resins), polyacrylic acids (PA resins), polyacrylate esters (PAE resins), polybutadienes (PB resins), polyisoprenes (PIP resins), polychloroprenes (PCP resins), and the like, and the polypropylene resins are more preferred.

The blending ratio of the resin and the low-crystallinity cellulose, in other words, the resin and the cellulose-containing powder of the invention 1, is such that the low-crystallinity cellulose or the cellulose-containing powder of the invention 1, based on 100 parts by mass of the resin, is preferably 5 parts by mass or more, more preferably 10 parts by mass or more, and even more preferably 15 parts by mass or more, and preferably 70 parts by mass or less, more preferably 50 parts by mass or less, even more preferably 40 parts by mass or less, and even more preferably 30 parts by mass or less, and the low-crystallinity cellulose or the cellulose-containing powder is preferably from 5 to 70 parts by mass, more preferably from 5 to 50 parts by mass, even more preferably from 5 to 40 parts by mass, still even more preferably from 5 to 30 parts by mass, still even more preferably from 10 to 30 parts by mass, and still even more preferably from 15 to 30 parts by mass.

Invention 2. Thermoplastic Resin Composition, Molded Article, Method for Producing Molded Article, and Method for Producing Resin Composition of the Present Invention

[Resin Composition]

The resin composition of the invention 2 is characterized in that the resin composition contains, based on the thermoplastic resin, a cellulose composite having a cellulose I crystallinity index of -20% or more and less than 50%, the cellulose composite being obtained by a specified treatment. Here, in the invention 2, a cellulose "having a cellulose I crystallinity index of -20% or more and less than 50%" will be described as a low-crystallinity cellulose.

In general, celluloses are highly crystalline. However, when the cellulose defined above is mixed and milled with a polymer having an affinity site to the cellulose, the polymer is likely to be penetrated to an internal of the cellulose, so that low-crystallinity progresses not only at the cellulose surface but also in an internal of the cellulose due to inhibition of firm interactions therebetween. Therefore, it is assumed that not only the elastic modulus is improved due to stability of the interfaces between the matrix resin and the cellulose, but also the dispersion state of the cellulose in the resin is improved, thereby improving strain at break. Moreover, although the cellulose is more likely to aggregate by hydrogen bonding with surface hydroxyl groups, a steric hindrance is obtained by the polymer, so that dispersibility of the cellulose obtained is even more improved, whereby the effects owing to the interactions with the polymer are assumed to be enhanced. However, the present invention is not intended to be limited by these assumptions. In the invention 2, the crystallinity of the cellulose refers to a cellulose I crystallinity index calculated according to Segal method from diffraction intensity values according to X-ray diffraction method, in which the crystallinity is defined by the following calculation formula (A). Here, since the cellulose I crystallinity index described in the invention 2 and the cellulose I crystallinity index described in the invention 1 are essentially the same, the invention 2 can include embodiments using not only a cellulose I crystallinity index described in the invention 2 but also a cellulose I crystallinity index described in the invention 1.

[Confirmation of Crystal Structure of Cellulose]

The crystal structure of the cellulose is confirmed by a measurement using "RigakuRINT 2500VC X-RAY diffractometer" manufactured by Rigaku under the following conditions. The measurement conditions are: X-ray source: Cu/K$\alpha$-radiation, tube voltage: 40 kv, tube current: 120 mA, measurement range: angle of diffraction $2\theta$ = 5° to 45°, scan speed of X-rays: 10°/min. A sample for the measurement is prepared by compressing a pellet of area of 320 mm$^2$ × a thickness of 1 mm. Also, the crystallinity of the cellulose I crystal structure is obtained by calculating X-ray diffraction intensity based on the following formula (A):

$$\text{Cellulose I Crystallinity Index (\%)} = [(I22.6\text{-}I18.5)/I22.6] \times 100$$

$$(A)$$

wherein I22.6 is a diffraction intensity of a lattice face (002 face)(angle of diffraction $2\theta$ = 22.6°), and I18.5 is a diffraction intensity of an amorphous portion (angle of diffraction $2\theta$ = 18.5°), in X-ray diffraction.

[Thermoplastic Resin (a)]

The thermoplastic resin in the invention 2 includes, but not particularly limited to, saturated polyester-based resins, olefin-based resins, cellulose-based resins, nylon resins, vinyl chloride resins, styrene resins, vinyl ether resins, polyvinyl alcohol resins, polyamide-based resins, polycarbonate-based resins, polysulfonate-based resins, and the like. These resins may be used alone or as a mixed resin of two or more kinds of resins. Among them, the olefin-based resins are preferred, from the viewpoint of improving the toughness.

Specific examples of the olefin-based resin include polyethylenes (PE resins), polypropylenes (PP resins), polystyrenes (PS resins), polyvinyl acetates (PVAc resins), polyvinyl chlorides (PVC resins), polyvinylidene chlorides (PVDC resins), polyacrylic acids (PA resins), polyacrylate esters (PAE resins), polybutadienes (PB resins), polyisoprenes (PIP resins), polychloroprenes (PCP resins), and the like. Among them, it is preferable to contain the polyethylenes or the polypropylenes, it is more preferable to contain the polyethylenes, from the viewpoint of satisfying both the rigidity and the toughness of the resin composition. The content of the olefin-based resin in the thermoplastic resin is preferably 60% by mass or more, more preferably 70% by mass or more, even more preferably 80% by mass or more, even more preferably 90% by mass or more, and even more preferably 95% by mass or more, from the viewpoint of satisfying both the rigidity and the toughness of the resin composition. The upper limit is not particularly limited, and the upper limit may consist of the olefin-based resin, i.e. 100% by mass.

The content of the thermoplastic resin in the resin composition of the invention 2 is preferably 60% by mass or more, more preferably 70% by mass or more, even more preferably 75% by mass or more, and even more preferably 80% or more, from the viewpoint of improving the toughness of the resin composition obtained. In addition, the content is preferably 95% by mass or less, more preferably 92.5% by mass or less, and even more preferably 90% by mass or less, from the viewpoint of improving the rigidity of the resin composition obtained.

[Low-Crystallinity Cellulose Composite (b)]

The low-crystallinity cellulose composite (b) is a mixed and milled product of a polymer having a cellulose affinity site and a cellulose, which is specifically obtained by, for example, subjecting cellulose-containing raw materials to a milling treatment in the presence of a polymer having a cellulose affinity site.

[Cellulose-Containing Raw Materials]

The cellulose-containing raw materials which can be used in the invention 2 are not particularly limited, which may have a cellulose I crystallinity index of preferably 10% or more, more preferably 30% or more, even more preferably 50% or more, and even more preferably 70% or more. Specifically, the cellulose-containing raw materials include woody raw materials (needle-leaf trees and broad-leaf trees); grassy raw materials (plant raw materials of Gramineae, Malvaceae, and Fabaceae, non-woody raw materials of plants of Palmae); pulps (cotton linter pulps obtained from fibers surrounding the cottonseeds, etc.); and papers (newspapers, corrugated cardboards, magazines, high-quality paper, etc.).

In the invention 2, since the low-crystallinity cellulose composite can be conveniently obtained by a milling treatment in the presence of a polymer described later, the sizes and shapes of the cellulose-containing raw materials are not particularly limited. For example, cellulose-containing raw materials in fibrous, powdery, spherical, chip-like, or flaky form can be used, or may be a mixture of these forms. Alternatively, cellulose-containing raw materials may be optionally sized to the above shape utilizing a cutting machine such as a shredder. Specifically, cellulose-containing raw materials include chip-like forms having, for example, from 0.1 to 70 mm per side, preferably from 1 to 50 mm per side, and more preferably from 1 to 30 mm per side. Here, the size of the cellulose-containing raw materials can be measured with a slide caliper.

The components of the cellulose-containing raw materials are not particularly limited. For example, the cellulose content in the raw materials includes preferably 30% by mass or more, more preferably 50 by mass or more, and even more preferably 70 by mass or more. In addition, the upper limit includes 100% by mass, and 99% by mass or less, from the viewpoint of availability. Here, the cellulose content in the cellulose-containing raw materials refers to a cellulose content in the remainder component after removing water in the cellulose-based raw materials.

In addition, the water content in the cellulose-containing raw materials includes, but not particularly limited to, preferably 0.01% by mass or more, more preferably 0.1% by mass or more, even more preferably 0.5% by mass or more, even more preferably 1.0% by mass or more, even more preferably 1.5% by mass or more, and even more preferably 2.0% by mass or more, from the viewpoint of availability and costs. In addition, one having a water content of preferably 50% by mass or less, more preferably 40% by mass or less, even more preferably 30% by mass or less, and even more preferably 20% by mass or less, can be used, from the viewpoint of handling property.

The cellulose-containing raw materials which can be used in the invention 2 may be subjected to a drying treatment, from the viewpoint of handling property. The treatment method therefor is not limited, and a known drying method may be properly selected, including, for example, hot-air heat transfer drying method, conductive heat transfer drying method, dehumidifying air-drying method, cool air drying method, microwave drying method, infrared ray drying method, sunlight drying method, vacuum-drying method, freeze-drying method, and the like. These drying methods may be used alone or in a combination of two or more kinds, and a drying apparatus can be properly selected in accordance with a drying method. In addition, the drying treatment can be carried out in a batch treatment or a continuous treatment.

The temperature in the drying treatment cannot be unconditionally determined because the temperature depends upon drying means, drying time, and the like. The temperature is preferably 10°C or higher, more preferably 50°C or higher, and even more preferably 60°C or higher, from the viewpoint of the treatment ability in the drying. In addition, the temperature is preferably 250°C or lower, and more preferably 150°C or lower, from the viewpoint of costs during the drying. As the treatment time, the lower limit is preferably 0.01 hr or more, and more preferably 0.02 hr or more, and the upper limit is preferably 2 hr or less, and more preferably 1 hr or less. The drying treatment may be optionally carried out under a reduced pressure, and the pressure includes from 1 to 120 kPa or so.

The water content of the cellulose-containing raw materials after the drying treatment is preferably 4.5% by mass or less, more preferably 4.0% by mass or less, even more preferably 3.5% by mass or less, and even more preferably 3.0% by mass or less, from the viewpoint of obtaining a desired cellulose fiber composite. Even in the milling treatment in the presence of the additive, so long as the water content is as defined above, the treatment can be favorably carried out without forming lumpy mass.

Here, the above drying treatment does not affect the crystallinity of the cellulose-containing raw materials, so that the crystallinity index of the cellulose-containing raw materials after the drying treatment is of the same level of the crystallinity index as a crystallinity index before the treatment.

[Polymer Having Cellulose Affinity Site]

The polymer which can be used in the invention 2 is a polymer having a cellulose affinity site. Here, the cellulose affinity site means a functional group capable of forming a covalent bond, an ionic bond, or a hydrogen bond with a cellulose.

The cellulose affinity site includes, for example, at least one functional group selected from the group consisting of an acid anhydride group, a carboxyl group, an amino group, an imino group, an alkoxysilyl group, a silanol group, a silyl ether group, a hydroxyl group, and an epoxy group. In addition, the polymer having a cellulose affinity site includes, for example, an olefin-based polymer having a functional group listed above.

The olefin-based polymer is preferably ethylene-based polymers [high-density polyethylenes, medium-density polyethylenes, low-density polyethylenes, copolymers formed between ethylene and one or more other vinyl compounds (e.g., $\alpha$-olefin, vinyl acetate, methacrylic acid, acrylic acid, etc.), and the like], propylene-based polymers [polypropylenes, copolymers formed between propylene and one or more other vinyl compounds, and the like], ethylene-propylene copolymers, polybutene, poly-4-methylpentene-1, and the like, and more preferably the ethylene-based polymers and the propylene-based polymers, from the viewpoint of satisfying both the rigidity and the toughness of the resin composition.

In addition, the functional group in the polyolefin-based resin, i.e., the cellulose affinity site, is at least one member selected from the group consisting of an acid anhydride group, a carboxyl group, an amino group, an imino group, an alkoxysilyl group, a silanol group, a silyl ether group, a hydroxyl group, and an epoxy group. The functional group is preferably an acid anhydride group, a silanol group, a silyl ether group, a hydroxyl group, and an epoxy group, and more preferably an acid anhydride group, from the viewpoint of satisfying both the rigidity and the toughness of the resin composition. Specific examples include maleic anhydride, maleic acid, succinic anhydride, succinic acid, and glycidyl methacrylate.

The polymer having a cellulose affinity site may be a high molecular weight compound having an acid anhydride (A) of the invention 1, and in that case the preferred embodiments are also the same.

The content mass of the cellulose affinity site in the polymer having a cellulose affinity site is preferably 1% by mass or more, more preferably 3% by mass or more, and even more preferably 5% by mass or more, from the viewpoint of improving the rigidity of the resin composition, and the content mass is preferably 70% by mass or less, more preferably 50% by mass or less, and even more preferably 30% by mass or less, from the viewpoint of improving the toughness of the resin composition.

The compound may be prepared by a known method, or a commercially available product may be used. Preferred commercially available products include "Bondfast 7M," a copolymer of a polyethylene having an epoxy group and (meth)acrylic acid, manufactured by SUMITOMO CHEMICAL CO., LTD.; "REXPEARL," a polyolefin-based resin having an epoxy group, manufactured by Japan Polyethylene Corporation; "MODIPER," a polyolefin-based resin having an epoxy group, manufactured by NOF CORPORATION; "Umex," a polypropylene having maleic anhydride, manufactured by Sanyo Chemical Industries, Ltd.; "OREVAC," a polyethylene having maleic anhydride, manufactured by ARKEMA; "LOTADER," a polyolefin-based resin having an acid anhydride, manufactured by ARKEMA; "BONDYNE," a polyolefin-based resin having an acid anhydride, manufactured by SUMITOMO CHEMICAL CO., LTD.; "NUCREL," a polyolefin-based resin having a carboxyl group, manufactured by DUPONT-MITSUI POLYCHEMICALS CO., LTD.; "PRIMACOR," a polyolefin-based resin having a carboxyl group, manufactured by Dow Chemical Company; and the like. These compounds can be used alone or in a combination of two or more kinds.

The weight-average molecular weight Mw of the polymer is preferably 5,000 or more, more preferably 7,500 or more, and even more preferably 10,000 or more, from the viewpoint of improving the rigidity of the resin composition. In addition, the weight-average molecular weight is preferably 500,000 or less, more preferably 250,000 or less, even more preferably 150,000 or less, even more preferably 100,000 or less, and even more preferably 50,000 or less, from the viewpoint of improving the toughness of the resin composition. The weight-average molecular weight of the high-molecular weight compound as used herein can be measured in accordance with a method described in Examples set forth below.

The melting point, °C, of the polymer is preferably 30°C or higher, more preferably 40°C or higher, even more preferably 60°C or higher, and even more preferably 80°C or higher, from the viewpoint of the rigidity of the cellulose obtained. In addition, the melting point is preferably 220°C or lower, more preferably 200°C or lower, even more preferably 180°C or lower, and even more preferably 160°C or lower, from the viewpoint of the toughness of the cellulose obtained. The melting point as used herein can be measured in accordance with a method described in Examples set forth below.

It is preferable that the low-crystallinity cellulose composite (b) is also a cellulose-containing powder obtained by the method for producing a cellulose-containing powder described in the invention 1, and the cellulose-containing powder described in the invention 1. In that case, the preferred embodiments of the cellulose-containing powder are as described in the invention 1.

The content mass of the polymer in the low-crystallinity cellulose composite (b), based on 100 parts by mass of the cellulose-containing raw materials, is preferably 0.1 parts by mass or more, more preferably 1 part by mass or more, even more preferably 5 parts by mass or more, even more preferably 10 parts by mass or more, and even more preferably 12 parts by mass or more, from the viewpoint of satisfying both the rigidity and the toughness of the resin composition, and the content mass is preferably 100 parts by mass or less, more preferably 75 parts by mass or less, even more preferably 55 parts by mass or less, even more preferably 40 parts by mass or less, and even more preferably 30 parts by mass or less, from the same viewpoint.

[Mixing and Milling]

The low-crystallinity cellulose composite (b) is obtained, for example, by subjecting cellulose-containing raw materials to a milling treatment in the presence of a polymer having a cellulose affinity site. The milling treatment includes, for example, a method of carrying out a milling treatment in a dry state using cellulose-containing raw materials and a polymer mentioned above. In the invention 2, the milling of the cellulose-containing raw materials in the presence of an additive is referred to as "mixing and milling."

The mill used in the milling treatment in the dry state is preferably a media mill. The media mills are vessel driving mills and media agitation mills. The vessel driving mills include tumbling mills, vibrating mills, planetary mills, centrifugal fluidized bed mills, and the like. Also, the media agitating mills include tower mills such as tower mills; agitation tank mills such as attritors, aquamizers, and sand grinders; flow tank-containing mills such as Visco mill and pearl mill; flow-tube-containing mills; annular mills such as co-ball mill; continuous dynamic mills, and the like. In these mills, the crystallinity of the cellulose obtained can be controlled by adjusting the peripheral speed of the rotor, the feeding speed of a sample, agitation time, and the like.

In addition, the materials which can be used for the medium include, but not particularly limited to, for example, iron, stainless steel, alumina, zirconia, silicon carbide, silicon nitride, glass, and the like. The shape of the medium includes, but not particularly limited to, balls, rods, tubes, and the like. Here, the word rod is a rod-shaped medium, and one of which cross-section is a polygonal such as quadrangular or hexagonal, circular or elliptic shape or the like can be used.

The filling ratio of the media differs in a more preferred filling ratio depending upon the kinds of machines of the mills and the shapes of the media, and in the case of, for example, a rod, the filling ratio is preferably 10% or more, and more preferably 15% or more, and preferably 70% or less, and more preferably 60% or less. When the filling ratio is within this range, the contact frequencies between the cellulose-containing raw materials and the rod are improved, whereby the milling efficiency can be improved. Here, the filling ratio refers to an apparent volume of the media based on the volume of the agitation part of the mill. In addition, it is preferable that the rods are used in a plurality, from the viewpoint of increasing contacting frequencies between the cellulose-containing raw materials and the rods, thereby improving milling efficiency.

The treatment time cannot be unconditionally determined because the treatment time depends upon the kinds of the mill and the kinds of media, sizes, filling ratios, and the like, and the treatment time is preferably 0.01 hr or more, more preferably 0.05 hr or more, and even more preferably 0.1 hr or more, from the viewpoint of reducing the crystallinity, and the treatment time is preferably 10 hr or less, more preferably 5 hr or less, and even more preferably 2 hr or less. The treatment temperature is, but not particularly limited to, usually from 5° to 250°C or so, from the viewpoint of preventing the degradation due to heat.

According to the above treatment method, strong aggregation of the milled cellulose particles themselves is inhibited, so that a low-crystallinity cellulose can be efficiently and productively produced. In addition, low-crystallinity cellulose raw materials can be treated in a dry state in an inner part of the mill without fusing thereto during the treatment with a mill.

Thus, a low-crystallinity cellulose composite having a cellulose I crystallinity index of -20% or more and less than 50%, having a reduced crystallinity, is obtained. The degree of reduction of crystallinity cannot be unconditionally determined because the degree depends upon the conditions of the milling treatment and the raw materials used in the milling treatment. However, the cellulose I crystallinity index of the cellulose composite obtained is smaller than the cellulose I crystallinity index of the raw materials used in the treatment, and the cellulose I crystallinity index is preferably -10% or more, and more preferably 0% or more, from the viewpoint of improving the rigidity of the resin composition, and the crystallinity index is preferably 30% or less, more preferably 10% or less, and even more preferably 5% or less, from the viewpoint of improving the toughness of the resin composition.

In addition, the low-crystallinity cellulose composite has a sharp particle size distribution, such that the content of the particles having particle sizes of 250 $\mu$m or more of the entire powders is preferably 30% by volume or less, more preferably 25% by volume or less, and even more preferably 20% by volume or less. In addition, the content of the particles having particle sizes of 32 $\mu$m or less of the entire powders is preferably 30% by volume or less, more preferably 25% by volume or less, and even more preferably 20% by volume or less.

The average particle size of the low-crystallinity cellulose composite is preferably 150 $\mu$m or less, and more preferably 100 $\mu$m or less. In addition, the average particle size is preferably 40 $\mu$m or more, and more preferably 50 $\mu$m or more, from the viewpoint of satisfying both the strength and the toughness of the resin composition. Here, the average particle size and the particle size distribution of the cellulose can be measured by methods described in Examples set forth below.

The content of the low-crystallinity cellulose composite in the resin composition of the invention 2, based on 100 parts by mass of the thermoplastic resin, is preferably 5 parts by mass or more, more preferably 10 parts by mass or more, and even more preferably 15 parts by mass or more, from the viewpoint of the rigidity of the resin composition obtained, and the content is preferably 70 parts by mass or less, more preferably 50 parts by mass or less, even more preferably 40 parts by mass or less, and even more preferably 30 parts by mass or less, from the viewpoint of the toughness of the resin composition obtained.

In addition, the content of the low-crystallinity cellulose composite in the resin composition is preferably 4% by mass or more, more preferably 9% by mass or more, and even more preferably 13% by mass or more, from the viewpoint of improving the rigidity of the resin composition obtained. In addition, the content is preferably 41% by mass or less, more preferably 33% by mass or less, even more preferably 29% by mass or less, and even more preferably 23% by mass or less, from the viewpoint of the toughness of the resin composition obtained.

[Crystal Nucleating Agent]

In addition, in the resin composition of the invention 2, besides the components mentioned above, a crystal nucleating agent can be further used, from the viewpoint of the rigidity of the molded article obtained.

The crystal nucleating agent includes inorganic crystal nucleating agents and organic crystal nucleating agents. The inorganic crystal nucleating agent includes natural or synthetic silicate compounds, titanium oxide, barium sulfate, calcium tripolyphosphate, calcium carbonate, sodium phosphate, kaolinite, halloysite, talc, smectite, vermiculite, mica, and the like. The organic crystal nucleating agent includes amides, metal salts of organic acids, sorbitol derivatives, nonitol derivatives, and the like, and the metal salts of organic acids and the sorbitol derivatives are preferred, from the viewpoint of improving the rigidity. The metal salts of organic acids include sodium benzoate, aluminum dibenzoate, potassium benzoate, lithium benzoate, sodium β-naphthalate, sodium cyclohexanecarboxylate, zinc phenylphosphonate, metal salts of phosphoric esters, and the like. The sorbitol derivatives include 1,3:2,4-bis-O-(4-methylbenzilidene)-D-sorbitol, and the like, and the sorbitol derivatives are preferred, from the viewpoint of satisfying both the rigidity and the toughness.

The content of the crystal nucleating agent, based on 100 parts by mass of the thermoplastic resin, is preferably 0.1 parts by mass or more, more preferably 0.3 parts by mass or more, and even more preferably 0.5 parts by mass or more, from the viewpoint of crystallization velocity, and the content is preferably 12 parts by mass or less, more preferably 10 parts by mass or less, even more preferably 5 parts by mass or less, even more preferably 3 parts by mass or less, and even more preferably 1.5 parts by mass or less, from the viewpoint of the physical properties of the resin.

In addition, the content of the crystal nucleating agent in the resin composition is preferably 0.04% by mass or more, more preferably 0.25% by mass or more, and even more preferably 0.4% by mass or more, from the viewpoint of crystallization velocity, and the content is preferably 17% by mass or less, more preferably 11% by mass or less, preferably 9% by mass or less, more preferably 5% by mass or less, even more preferably 3% by mass or less, and even more preferably 1.5% by mass or less, from the viewpoint of the physical properties of the resin.

The resin composition of the invention 2 can contain, as other components besides those mentioned above, a plasticizer; a filler including an inorganic filler and an organic filler; a hydrolysis inhibitor; a flame retardant; an antioxidant; a lubricant such as a hydrocarbon wax or an anionic surfactant; an ultraviolet absorbent; an antistatic agent; an anti-clouding agent; a photostabilizer; a pigment; a mildewproof agent; a bactericidal agent; a blowing agent; a surfactant; a polysaccharide such as starch or alginic acid; a natural protein such as gelatin, glue, or casein; an inorganic compound such as tannin, zeolite, ceramics, or metal powder; a perfume; a fluidity modulator; a leveling agent; an electroconductive agent; an ultraviolet dispersant; a deodorant; or the like, within the range that would not impair the effects of the present invention. In addition, similarly, other polymeric materials and other resin compositions can be properly added within the range that would not impair the effects of the present invention. For example, as to the content proportion of the optional additives, the optional additives are properly contained within the range that would not impair the effects of the present invention, and the content proportion of the optional additives is, for example, preferably 20% by mass or less, more preferably 10% by mass or less, and even more preferably 5% by mass or less, of the resin composition.

The resin composition of the invention 2 can be prepared without particular limitations, so long as the resin composition contains a low-crystallinity cellulose composite mentioned above against the above thermoplastic resin. For example, the resin composition can be prepared by subjecting raw materials containing besides the components mentioned above optionally various additives to stirring with a Henschel mixer or melt-kneading with a known kneader such as a closed kneader, a single-screw or twin-screw extruder, or an open roller-type kneader, or to a solvent cast method. The raw materials can be subjected to melt-kneading after homogeneously mixing the raw materials with a Henschel mixer or a super mixer in advance. In the resin composition of the invention 2, the dispersibility of the modified cellulose is also improved with the compatibilizing agent, so that the raw materials can be mixed at one time to be melt-kneaded without being separately mixed in advance. Here, the melt blending may be carried out in the presence of a supercritical gas, in order to accelerate the plasticity of the thermoplastic resin when the resin composition is prepared. After the melt-kneading, a melt-kneaded product may be dried in accordance with a known method.

The melt-kneading temperature is preferably 180°C or higher, more preferably 190°C or higher, and even more preferably 200°C or higher, and preferably 300°C or lower, more preferably 290°C or lower, and even more preferably 280°C or lower, from the viewpoint of improving moldability and prevention of degradation of the resin composition. The melt-kneading time cannot be unconditionally determined because the melt-kneading time depends upon the melt-kneading temperature and the kinds of the kneaders, and the melt-kneading time is preferably 15 seconds or more and 900 seconds or less.

[Method for Producing Resin Composition]

The invention 2 also provides a method for producing a resin composition of the invention 2.
The method for producing a resin composition of the invention 2 is not particularly limited, so long as the method includes the step of mixing a low-crystallinity cellulose composite defined above based on 100 parts by mass of the above thermoplastic resin. For example, an embodiment includes mixing raw materials containing, besides the thermoplastic resin and the low-crystallinity cellulose composite, further optional various additives at a temperature of preferably 180°C or higher, more preferably 190°C or higher, and even more preferably 200°C or higher, and preferably 300°C or lower, more preferably 290°C or lower, and even more preferably 280°C or lower. Here, during mixing, it is preferable to mix the raw materials at one time, from the viewpoint of productivity. The mixing time is not unconditionally set because the mixing time depends upon the components of the raw materials and the mixing temperatures, and the mixing time is, for example, 15 seconds or more and 900 seconds or less. Here, the method for preparing a low-crystallinity cellulose composite can be referred to the section of the resin composition of the invention 2.

Since the resin composition of the invention 2 satisfy both the rigidity and the toughness, the resin composition can be suitably used in daily sundries, household electric appliance parts, automobile parts, and the like by using various mold processing methods such as injection molding, extrusion molding, and thermoforming.

[Molded Article and Method for Producing Molded Article]

The invention 2 also provides a molded article made of a resin composition of the invention 2.

The molded article is not particularly limited, so long as the molded article is a molded article made of a resin composition of the invention 2. For example, the molded article can be produced by appropriately using the above resin composition in a known molding method such as extrusion-molding, injection-molding, press molding, casting molding, or solvent casting. For example, a molded article according to the applications can be obtained by injecting or applying to a package, a substrate or the like, and drying to cure.

When a sheet-like molded article is produced, from the viewpoint of processability, its thickness is preferably 0.05 mm or more, more preferably 0.1 mm or more, and even more preferably 0.15 mm or more. In addition, the thickness is preferably 1.5 mm or less, more preferably 1.0 mm or less, and even more preferably 0.5 mm or less.

Since the molded article made of a resin composition of the invention 2 thus obtained has excellent toughness and rigidity, the molded article can be suitably used in various applications, for example, wrapping materials for daily sundries, cosmetics, household electric appliances, and the like; food containers such as blistered packs and trays, and lids for lunch boxes; industrial trays used in transportation or protections of industrial parts; and the like.

With respect to the above-mentioned embodiments, the present invention further discloses the following methods for producing a cellulose-containing powder and the cellulose-containing powders.

Further, with respect to the above-mentioned embodiments, the present invention further discloses the following compositions, production methods, molded articles, methods for producing a molded article, and low-crystallinity composites.

<1> A method for producing a cellulose-containing powder having a cellulose I crystallinity index of -20% or more and less than 50%, including adding, to 100 parts by mass of cellulose-containing raw materials having a cellulose I crystallinity index of 10% or more and less than 100%, 0.1 parts by mass or more and 100 parts by mass or less of one or more additives selected from the group consisting of the following (A), (B), and (C):

　　　(A) high-molecular weight compounds having acid anhydrides,
　　　(B) low-molecular weight compounds having acid anhydrides, and
　　　(C) silane coupling agents; and

subjecting a mixture to a milling treatment in a dry state.

<2> The method for producing a cellulose-containing powder according to the above <1>, wherein the cellulose I crystallinity index of the cellulose-containing raw materials is preferably 20% or more, more preferably 30% or more, even more preferably 40% or more, even more preferably 50% or more, and even more preferably 60% or more.

<3> The method for producing a cellulose-containing powder according to the above <1> or <2>, wherein the amount of the additive used is preferably 0.5 parts by mass or more, more preferably 1 part by mass or more, more preferably 3 parts by mass or more, and even more preferably 5 parts by mass or more, based on 100 parts by mass of the cellulose-containing raw materials.

<4> The method for producing a cellulose-containing powder according to any one of the above <1> to <3>, wherein the amount of the additive used is preferably 75 parts by mass or less, more preferably 50 parts by mass or less, even more preferably 25 parts by mass or less, and even more preferably 20 parts by mass or less, based on 100 parts by mass of the cellulose-containing raw materials.

<5> The method for producing a cellulose-containing powder according to any one of the above <1> to <4>, wherein the amount of the additive used is preferably 0.5 parts by mass or more and 75 parts by mass or less, more preferably 0.5 parts by mass or more and 50 parts by mass or less, even more preferably 1 part by mass or more and 25 parts by mass or less, even more preferably 1 part by mass or more and 20 parts by mass or less, even more preferably 3 parts by mass or more and 20 parts by mass or less, and even more preferably 5 parts by mass or more and 20 parts by mass or less, based on 100 parts by mass of the cellulose-containing raw materials.

<6> The method for producing a cellulose-containing powder according to any one of the above <1> to <5>, wherein the cellulose content in the raw materials is preferably 30% by mass or more, more preferably 50% by mass or more, and even more preferably 70% by mass or more.

<7> The method for producing a cellulose-containing powder according to any one of the above <1> to <6>, wherein the cellulose content in the raw materials is such that its upper limit is preferably 100% by mass, and more preferably 99% by mass or less.

<8> The method for producing a cellulose-containing powder according to any one of the above <1> to <7>, wherein the water content in the cellulose-containing raw materials is preferably 0.01% by mass or more, more preferably 0.1% by mass or more, even more preferably 0.5% by mass or more, even more preferably 1.0% by mass or more, even more preferably 1.5% by mass or more, and even more preferably 2.0% by mass or more.

<9> The method for producing a cellulose-containing powder according to any one of the above <1> to <8>, wherein the water content in the cellulose-containing raw materials is preferably 50% by mass or less, more preferably 40% by mass or less, even more preferably 30% by mass or less, and even more preferably 20% by mass or less.

<10> The method for producing a cellulose-containing powder according to any one of the above <1> to <9>, wherein the water content in the cellulose-containing raw materials after the drying treatment is preferably 4.5% by mass or less, more preferably 4.0% by mass or less, even more preferably 3.5% by mass or less, and even more preferably 3.0% by mass or less.

<11> The method for producing a cellulose-containing powder according to any one of the above <1> to <10>, wherein combinations in a case where two or more kinds of additives are used are preferably two or more kinds out of (A), two or more kinds out of (B), or two or more kinds out of (C), a combination of (A) and (B), a combination of (B) and (C), a combination of (A) and (C), and a combination of (A), (B), and (C).

<12> The method for producing a cellulose-containing powder according to any one of the above <1> to <11>, wherein it is preferable that the additive is one or more members selected from the group consisting of (A) and (C).

<13> The method for producing a cellulose-containing powder according to any one of the above <1> to <12>, wherein the acid anhydrides in the compound (A) are preferably maleic anhydride, succinic anhydride, and glutaric anhydride.

<14> The method for producing a cellulose-containing powder according to any one of the above <1> to <13>, wherein the high-molecular weight compounds in the compound (A) are preferably a polyolefin-based resin, an acrylic resin, and a styrenic resin.

<15> The method for producing a cellulose-containing powder according to any one of the above <1> to <14>, wherein the polyolefin-based resin is preferably ethylene-based polymers [high-density polyethylenes, medium-density polyethylenes, low-density polyethylenes, copolymers formed between ethylene and one or more other vinyl compounds (e.g., $\alpha$-olefin, vinyl acetate, methacrylic acid, acrylic acid, etc.), and the like], propylene-based polymers [polypropylenes, copolymers formed between propylene and one or more other vinyl compounds, and the like], ethylene-propylene copolymers, polybutene, and poly-4-methylpentene-1.

<16> The method for producing a cellulose-containing powder according to any one of the above <1> to <15>, wherein the weight-average molecular weight of the compound (A) is preferably 1,000 or more, more preferably 5,000 or more, even more preferably 10,000 or more, and even more preferably 20,000 or more.

<17> The method for producing a cellulose-containing powder according to any one of the above <1> to <16>, wherein the weight-average molecular weight of the compound (A) is preferably 150,000 or less, more preferably 140,000 or less, and even more preferably 130,000 or less.

<18> The method for producing a cellulose-containing powder according to any one of the above <1> to <17>, wherein the melting point of the compound (A) is preferably 250°C or lower, more preferably 200°C or lower, even more preferably 180°C or lower, and even more preferably 170°C or lower.

<19> The method for producing a cellulose-containing powder according to any one of the above <1> to <18>, wherein the melting point of the compound (A) has a preferred lower limit of 100°C.

<20> The method for producing a cellulose-containing powder according to any one of the above <1> to <19>, wherein the compound (A) is preferably a maleic anhydride-modified polyolefin, and more preferably a maleic anhydride-modified polypropylene.

<21> The method for producing a cellulose-containing powder according to any one of the above <1> to <20>, wherein the acid anhydrides in the compound (B) are preferably maleic anhydride, succinic anhydride, and glutaric anhydride.

<22> The method for producing a cellulose-containing powder according to any one of the above <1> to <21>, wherein the low-molecular weight moiety in the compound (B) is preferably a hydrocarbon group, and more preferably a chained saturated hydrocarbon group, a chained unsaturated hydrocarbon group, a cyclic saturated hydrocarbon group, and an aromatic hydrocarbon group.

<23> The method for producing a cellulose-containing powder according to any one of the above <1> to <22>, wherein the number of carbon atoms of the chained saturated hydrocarbon group is preferably 1 or more, more preferably 3 or more, even more preferably 5 or more, even more preferably 10 or more, and even more preferably 15 or more.

<24> The method for producing a cellulose-containing powder according to any one of the above <1> to <23>, wherein the number of carbon atoms of the chained saturated hydrocarbon group is preferably 30 or less, more preferably 24 or less, even more preferably 20 or less, and even more preferably 18 or less.

<25> The method for producing a cellulose-containing powder according to any one of the above <1> to <24>, wherein the chained saturated hydrocarbon group is preferably a methyl group, an ethyl group, a propyl group, an isopropyl group, a butyl group, a sec-butyl group, a tert-butyl group, an isobutyl group, a pentyl group, a tert-pentyl group, an isopentyl group, a hexyl group, an isohexyl group, a heptyl group, an octyl group, a 2-ethylhexyl group, a nonyl group, a decyl group, a dodecyl group, a tridecyl group, a tetradecyl group, an octadecyl group, a docosyl group, an octacosanyl group, and the like.

<26> The method for producing a cellulose-containing powder according to any one of the above <1> to <25>, wherein the number of carbon atoms of the chained unsaturated hydrocarbon group is preferably 2 or more, more preferably 3 or more, even more preferably 5 or more, and even more preferably 10 or more.

<27> The method for producing a cellulose-containing powder according to any one of the above <1> to <26>, wherein the number of carbon atoms of the chained unsaturated hydrocarbon group is preferably 30 or less, more preferably 24 or less, even more preferably 20 or less, and even more preferably 18 or less.

<28> The method for producing a cellulose-containing powder according to any one of the above <1> to <27>, wherein the chained unsaturated hydrocarbon group is preferably an ethenyl group, a propenyl group, a butenyl group, an isobutenyl group, an isoprenyl group, a pentenyl group, a hexenyl group, a heptenyl group, an octenyl group, a nonenyl group, a decenyl group, a dodecenyl group, a tridecenyl group, a tetradecenyl group, and an octadecenyl group.

<29> The method for producing a cellulose-containing powder according to any one of the above <1> to <28>, wherein the number of carbon atoms of the cyclic saturated hydrocarbon group is preferably 3 or more, more preferably 4 or more, and even more preferably 5 or more.

<30> The method for producing a cellulose-containing powder according to any one of the above <1> to <29>, wherein the number of carbon atoms of the cyclic saturated hydrocarbon group is preferably 20 or less, more preferably 16 or less, even more preferably 12 or less, and even more preferably 8 or less.

<31> The method for producing a cellulose-containing powder according to any one of the above <1> to <30>, wherein the cyclic saturated hydrocarbon group is preferably a cyclopropyl group, a cyclobutyl group, a cyclopentyl group, a cyclohexyl group, a cycloheptyl group, a cyclooctyl group, a cyclononyl group, a cyclodecyl group, a cyclododecyl group, a cyclotridecyl group, a cyclotetradecyl group, and a cyclooctadecyl group.

<32> The method for producing a cellulose-containing powder according to any one of the above <1> to <31>, wherein the aromatic hydrocarbon group is preferably selected from the group consisting of aryl groups and aralkyl groups.

<33> The method for producing a cellulose-containing powder according to any one of the above <1> to <32>, wherein a total number of carbon atoms of the aryl group is preferably 6 or more.

<34> The method for producing a cellulose-containing powder according to any one of the above <1> to <33>, wherein a total number of carbon atoms of the aryl group is preferably 24 or less, more preferably 20 or less, even more preferably 14 or less, even more preferably 12 or less, and even more preferably 10 or less.

<35> The method for producing a cellulose-containing powder according to any one of the above <1> to <34>, wherein a total number of carbon atoms of the aralkyl group is preferably 7 or more, and more preferably 8 or more.

<36> The method for producing a cellulose-containing powder according to any one of the above <1> to <35>, wherein a total number of carbon atoms of the aralkyl group is preferably 24 or less, more preferably 20 or less, even more preferably 14 or less, even more preferably 13 or less, and even more preferably 11 or less.

<37> The method for producing a cellulose-containing powder according to any one of the above <1> to <36>, wherein the aryl group is preferably a phenyl group, a naphthyl group, an anthryl group, a phenanthryl group, a biphenyl group, a triphenyl group, and a terphenyl group, and wherein the aralkyl group is preferably a benzyl group, a phenethyl group, a phenylpropyl group, a phenylpentyl group, a phenylhexyl group, a phenylheptyl group, and a phenyloctyl group.

<38> The method for producing a cellulose-containing powder according to any one of the above <1> to <37>, wherein the hydrocarbon group has a substituent, wherein the substituent is preferably alkoxy groups having from 1 to 6 carbon atoms, such as a methoxy group, an ethoxy group, a propoxy group, an isopropoxy group, a butoxy group, an isobutoxy group, a sec-butoxy group, a tert-butoxy group, a pentyloxy group, an isopentyloxy group, and a hexyloxy group; alkoxy-carbonyl groups, of which alkoxy group has from 1 to 6 carbon atoms, such as a methoxycarbonyl group, an ethoxycarbonyl group, a propoxycarbonyl group, an isopropoxycarbonyl group, a butoxycarbonyl group, an isobutoxycarbonyl group, a sec-butoxycarbonyl group, a tert-butoxycarbonyl group, a pentyloxycarbonyl group, and an isopentyloxycarbonyl group; halogen atoms such as a fluorine atom, a chlorine atom, a bromine atom, and an iodine atom; acyl groups having from 1 to 6 carbon atoms, such as an acetyl group and a propionyl group; aralkyl groups; aralkyloxy groups; alkylamino groups having from 1 to 6 carbon atoms; and dialkylamino groups of which alkyl group has from 1 to 6 carbon atoms.

<39> The method for producing a cellulose-containing powder according to any one of the above <1> to <38>, wherein the molecular weight of the compound (B) is preferably 50 or more, more preferably 100 or more, and even more preferably 200 or more.

<40> The method for producing a cellulose-containing powder according to any one of the above <1> to <39>, wherein the molecular weight of the compound (B) is preferably 600 or less, more preferably 500 or less, and even more preferably 400 or less.

<41> The method for producing a cellulose-containing powder according to any one of the above <1> to <40>, wherein the compound (B) is preferably one or more members selected from alkylsuccinic or alkenylsuccinic anhydrides and alkylglutaric or alkenylglutaric anhydrides, and more preferably dodecenylsuccinic anhydride, hexadecenylsuccinic anhydride, hexadecylglutaric anhydride, and octadecylglutaric anhydride.

<42> The method for producing a cellulose-containing powder according to any one of the above <1> to <41>, wherein the compound (C) is preferably coupling agents such as isocyanate silanes, amino silanes, mercapto silanes, epoxy silanes, vinyl silanes, methacrylic silanes, and epoxy silanes.

<43> The method for producing a cellulose-containing powder according to any one of the above <1> to <42>, wherein the isocyanate silane is preferably 3-isocyanate propylmethoxysilane, 3-isocyanate propylethoxysilane, and tris-(3-trimethoxysilylpropyl) isocyanurate, and wherein the amino silane is preferably γ-aminopropyltriethoxysilane and n-β(aminoethyl)γ-aminopropyltriethoxysilane, and wherein the mercapto silane is preferably 3-mercaptopropyltrimethoxysilane, and wherein the epoxy silane is preferably 2-(3,4-epoxycylohexyl)ethyltrimethoxysilane, 3-glycidoxypropyltrimethoxysilane, and 3-glycidoxypropylmethy ldiethoxysilane.

<44> The method for producing a cellulose-containing powder according to any one of the above <1> to <43>, wherein the milling treatment in a dry state is carried out with a media mill.

<45> The method for producing a cellulose-containing powder according to any one of the above <1> to <44>, wherein the media mills are preferably vessel driving mills and media agitation mills.

<46> The method for producing a cellulose-containing powder according to any one of the above <1> to <45>, wherein the vessel driving mills are preferably tumbling mills, vibration mills, planetary mills, and centrifugal fluidized bed mills.

<47> The method for producing a cellulose-containing powder according to any one of the above <1> to <46>, wherein the media agitating mills are preferably tower mills such as tower mills; agitation tank mills such as attritors, aquamizers, and sand grinders; flow tank-containing mills such as Visco mill and pearl mill; flow-tube-containing mills; annular mills such as co-ball mill; and continuous dynamic mills.

<48> The method for producing a cellulose-containing powder according to any one of the above <1> to <47>, wherein the treatment time of the milling treatment is preferably 0.01 hr or more, more preferably 0.05 hr or more, and even more preferably 0.1 hr or more.

<49> The method for producing a cellulose-containing powder according to any one of the above <1> to <48>, wherein the treatment time of the milling treatment is preferably 10 hr or less, more preferably 5 hr or less, even more preferably 2 hr or less, even more preferably 1 hr or less, and still even more preferably 0.5 hr or less.

<50> The method for producing a cellulose-containing powder according to any one of the above <1> to <49>, wherein the treatment temperature of the milling treatment is preferably 5°C or higher.

<51> The method for producing a cellulose-containing powder according to any one of the above <1> to <50>, wherein the treatment temperature of the milling treatment is preferably 250°C or lower.

<52> The method for producing a cellulose-containing powder according to any one of the above <1> to <51>, wherein the cellulose I crystallinity index of the cellulose-containing powder produced is preferably -20% or more, more preferably -10% or more, and even more preferably 0% or more.

<53> The method for producing a cellulose-containing powder according to any one of the above <1> to <52>, wherein the cellulose I crystallinity index of the cellulose-containing powder produced is preferably 50% or less, more preferably 40% or less, even more preferably 30% or less, and still even more preferably 25% or less.

<54> The method for producing a cellulose-containing powder according to any one of the above <1> to <53>, wherein the cellulose I crystallinity index of the cellulose-containing powder produced is preferably -20% or more and 50% or less, more preferably -10% or more and 40% or less, even more preferably 0% or more and 30% or less, and still even more preferably 0% or more and 25% or less.

<55> The method for producing a cellulose-containing powder according to any one of the above <1> to <54>, wherein the proportion of particles having particle sizes of 32 μm or less in the entire cellulose-containing powder produced is preferably 30% by volume or less, more preferably 25% by volume or less, even more preferably 20% by volume or less, even more preferably 10% by volume or less, and even more preferably 5% by volume or less.

<56> The method for producing a cellulose-containing powder according to any one of the above <1> to <55>, wherein the proportion of particles having particle sizes of 32 $\mu$m or less in the entire cellulose-containing powders produced is preferably 0.01% by volume or more, more preferably 0.1% by volume or more, and even more preferably 0.3% by volume or more.

<57> The method for producing a cellulose-containing powder according to any one of the above <1> to <56>, wherein the content of the particles having particle sizes of 32 $\mu$m or less in the entire cellulose-containing powders produced is preferably from 0.01 to 30% by volume, more preferably from 0.01 to 25% by volume, even more preferably from 0.01 to 20% by volume, even more preferably from 0.01 to 10% by volume, even more preferably from 0.01 to 5% by volume, even more preferably from 0.1 to 5% by volume, and even more preferably from 0.3 to 5% by volume, of the entire powders.

<58> The method for producing a cellulose-containing powder according to any one of the above <1> to <57>, wherein the content of the particles having particle sizes exceeding 250 $\mu$m in the entire cellulose-containing powders produced is preferably 50% by volume or less, more preferably 45% by volume or less, even more preferably 40% by volume or less, even more preferably 30% by volume or less, and even more preferably 20% by volume or less, of the entire powders (of the cellulose-containing powders obtained).

<59> The method for producing a cellulose-containing powder according to any one of the above <1> to <58>, wherein the content of the particles having particle sizes exceeding 250 $\mu$m in the entire cellulose-containing powders produced is preferably 0.1% by volume or more, and more preferably 1% by volume or more, of the entire powders (of the cellulose-containing powders obtained).

<60> The method for producing a cellulose-containing powder according to any one of the above <1> to <59>, wherein the content of the particles having particle sizes exceeding 250 $\mu$m in the entire cellulose-containing powders produced is preferably from 0.1 to 50% by volume, more preferably from 0.1 to 45% by volume, even more preferably from 0.1 to 40% by volume, even more preferably from 0.1 to 30% by volume, more preferably from 0.1 to 20% by volume, and even more preferably from 1 to 20% by volume, of the entire powders.

<61> The method for producing a cellulose-containing powder according to any one of the above <1> to <60>, wherein the proportion of particles having particle sizes of exceeding 32 $\mu$m and 150 $\mu$m or less in the entire cellulose-containing powders produced is preferably 40% by volume or more, more preferably 45% by volume or more, and even more preferably 50% by volume or more.

<62> The method for producing a cellulose-containing powder according to any one of the above <1> to <61>, wherein the proportion of particles having particle sizes of exceeding 32 $\mu$m and 150 $\mu$m or less in the entire cellulose-containing powders produced is preferably 98% by volume or less, more preferably 95% by volume or less, and even more preferably 90% by volume or less.

<63> The method for producing a cellulose-containing powder according to any one of the above <1> to <62>, wherein the proportion of particles having particle sizes of exceeding 32 $\mu$m and 150 $\mu$m or less is preferably from 40 to 98% by volume, more preferably from 45 to 95% by volume, and even more preferably from 50 to 90% by volume.

<64> The method for producing a cellulose-containing powder according to any one of the above <1> to <63>, wherein the resin with which the cellulose-containing powder produced is blendable is preferably one or more members selected from polypropylene resins, polyethylene resins, polystyrene resins, polyvinyl acetate resins, polyvinyl chloride resins, polyvinylidene chloride resins, polyacrylic acid resins, polyacrylate ester resins, polybutadiene resins, polyisoprene resins, and polychloroprene resins, and more preferably the polypropylene resins.

<65> The method for producing a cellulose-containing powder according to any one of the above <1> to <64>, wherein the blending ratio of the resin and the cellulose-containing powder produced is such that the cellulose-containing powder produced, based on 100 parts by mass of the resin, is preferably 5 parts by mass or more, more preferably 10 parts by mass or more, and even more preferably 15 parts by mass or more.

<66> The method for producing a cellulose-containing powder according to any one of the above <1> to <65>, wherein the blending ratio of the resin and the cellulose-containing powder produced is such that the cellulose-containing powder produced, based on 100 parts by mass of the resin, is preferably 70 parts by mass or less, more preferably 50 parts by mass or less, even more preferably 40 parts by mass or less, and even more preferably 30 parts by mass or less.

<67> The method for producing a cellulose-containing powder according to any one of the above <1> to <66>, wherein the tensile modulus, GPa, of the molded article obtained is preferably 1.9 GPa or more.

<68> The method for producing a cellulose-containing powder according to any one of the above <1> to <67>, wherein the tensile strain at break, %, is preferably 4% or more in a case where the kind of the resin is composed of PP, and the tensile strain at break is 50% or more in a case where the kind of the resin is composed of PE.

<69> The method for producing a cellulose-containing powder according to any one of the above <1> to <68>, wherein the stress at an yield point, MPa, of the molded article obtained is preferably 35 MPa or more in a case where the kind of the resin is composed of PP, and the stress at an yield point is 11 MPa or more in a case where the kind of the resin is composed of PE.

<70> The method for producing a cellulose-containing powder according to any one of the above <1> to <69>, wherein the difference in the cellulose I crystallinity index (A) before and after the milling treatment, i.e., Cellulose I Crystallinity Index (A) Before the Milling Treatment - Cellulose I Crystallinity Index (A) After the Milling Treatment, is preferably 30% or more, more preferably 40% or more, and even more preferably 50% or more.

<71> The method for producing a cellulose-containing powder according to any one of the above <1> to <70>, wherein the difference in the cellulose I crystallinity index (A) before and after the milling treatment is preferably 120% or less, more preferably 100% or less, and even more preferably 90% or less.

<72> The method for producing a cellulose-containing powder according to any one of the above <1> to <71>, wherein the difference in the cellulose I crystallinity index (A) before and after the milling treatment, i.e., Cellulose I Crystallinity Index (A) Before the Milling Treatment - Cellulose I Crystallinity Index (A) After the Milling Treatment, is preferably from 30 to 120%, more preferably from 40 to 100%, and even more preferably from 50 to 90%.

<73> The method for producing a cellulose-containing powder according to any one of the above <1> to <72>, wherein the content of the particles having particle sizes of exceeding 32 μm and 250 μm or less, in the entire cellulose-containing powders produced, is preferably 40% by volume or more, more preferably 45% by volume or more, even more preferably 50% by volume or more, and even more preferably 60% by volume or more, of the entire powders.

<74> The method for producing a cellulose-containing powder according to any one of the above <1> to <73>, wherein the content of the particles having particle sizes of exceeding 32 μm and 250 μm or less, in the entire cellulose-containing powders produced, is preferably 98% by volume or less, more preferably 95% by volume or less, and even more preferably 90% by volume or less, of the entire powders.

<75> The method for producing a cellulose-containing powder according to any one of the above <1> to <74>, wherein the content of the particles having particle sizes of exceeding 32 μm and 250 μm or less, in the entire cellulose-containing powders produced, is preferably from 40 to 98% by volume, more preferably from 45 to 95% by volume, even more preferably from 50 to 90% by volume, and even more preferably from 60 to 90% by volume.

<76> A cellulose-containing powder having a cellulose I crystallinity index of -20% or more and less than 50%, wherein the cellulose-containing powder contains, based on 100 parts by mass of cellulose-containing raw materials, 0.1 parts by mass or more and 100 parts by mass or less of one or more additives selected from the group consisting of the following (A), (B), and (C):

(A) high-molecular weight compounds having acid anhydrides,
(B) low-molecular weight compounds having acid anhydrides, and
(C) silane coupling agents.

<77> The cellulose-containing powder according to the above <76>, produced in accordance with a method for producing a cellulose-containing powder as defined in any one of the above <1> to <75>.

<78> The cellulose-containing powder according to the above <76> or <77>, wherein the cellulose I crystallinity index of the cellulose-containing powder is preferably -10% or more, and more preferably 0% or more.

<79> The cellulose-containing powder according to any one of the above <76> to <78>, wherein the cellulose I crystallinity index of the cellulose-containing powder is preferably 50% or less, more preferably 40% or less, even more preferably 30% or less, and still even more preferably 25% or less.

<80> The cellulose-containing powder according to any one of the above <76> to <79>, wherein the cellulose I crystallinity index of the cellulose-containing powder is preferably -20% or more and 50% or less, more preferably -10% or more and 40% or less, even more preferably 0% or more and 30% or less, and still even more preferably 0% or more and 25% or less.

<81> The cellulose-containing powder according to any one of the above <76> to <80>, wherein the additive is in an amount of preferably 0.5 parts by mass or more, more preferably 1 part by mass or more, more preferably 3 parts by mass or more, and even more preferably 5 parts by mass or more, based on 100 parts by mass of the cellulose-containing raw materials.

<82> The cellulose-containing powder according to any one of the above <76> to <81>, wherein the additive is in an amount of preferably 75 parts by mass or less, more preferably 50 parts by mass or less, even more preferably 25 parts by mass or less, and even more preferably 20 parts by mass or less, based on 100 parts by mass of the cellulose-containing raw materials.

<83> The cellulose-containing powder according to any one of the above <76> to <82>, wherein the amount of the additive used, based on 100 parts by mass of the cellulose-containing raw materials, is preferably 0.5 parts by mass or more and 75 parts by mass or less, more preferably 0.5 parts by mass or more and 50 parts by mass or less, even more preferably 1 part by mass or more and 25 parts by mass or less, even more preferably 1 part by mass or more and 20 parts by mass or less, even more preferably 3 parts by mass or more and 20 parts by mass or less, and even more preferably 5 parts by mass or more and 20 parts by mass or less.

<84> The cellulose-containing powder according to any one of the above <76> to <83>, wherein the proportion of the particles having particle sizes of 32 $\mu$m or less, in the entire cellulose-containing powders, is preferably 30% by volume or less, more preferably 25% by volume or less, even more preferably 20% by volume or less, even more preferably 10% by volume or less, and even more preferably 5% by volume or less.

<85> The cellulose-containing powder according to any one of the above <76> to <84>, wherein the proportion of the particles having particle sizes of 32 $\mu$m or less, in the entire cellulose-containing powders, is preferably 0.01% by volume or more, more preferably 0.1% by volume or more, and even more preferably 0.3% by volume or more.

<86> The cellulose-containing powder according to any one of the above <76> to <85>, wherein the content of the particles having particle sizes of 32 $\mu$m or less, in the entire cellulose-containing powders, is preferably from 0.01 to 30% by volume, more preferably from 0.01 to 25% by volume, even more preferably from 0.01 to 20% by volume, even more preferably from 0.01 to 10% by volume, even more preferably from 0.01 to 5% by volume, even more preferably from 0.1 to 5% by volume, and even more preferably from 0.3 to 5% by volume, of the entire powders.

<87> The cellulose-containing powder according to any one of the above <76> to <86>, wherein the content of the particles having particle sizes of exceeding 250 $\mu$m, in the entire cellulose-containing powders, is preferably 50% by volume or less, more preferably 45% by volume or less, even more preferably 40% by volume or less, even more preferably 30% by volume or less, and even more preferably 20% by volume or less, of the entire powders (of the cellulose-containing powders obtained).

<88> The cellulose-containing powder according to any one of the above <76> to <87>, wherein the content of the particles having particle sizes of exceeding 250 $\mu$m, in the entire cellulose-containing powders, is preferably 0.1% by volume or more, and more preferably 1% by volume or more.

<89> The cellulose-containing powder according to any one of the above <76> to <88>, wherein the content of the particles having particle sizes of exceeding 250 $\mu$m, in the entire cellulose-containing powders, is preferably from 0.1 to 50% by volume, more preferably from 0.1 to 45% by volume, even more preferably from 0.1 to 40% by volume, even more preferably from 0.1 to 30% by volume, more preferably from 0.1 to 20% by volume, and even more preferably from 1 to 20% by volume.

<90> The cellulose-containing powder according to any one of the above <76> to <89>, wherein the content of the particles having particle sizes of exceeding 32 $\mu$m and 250 $\mu$m or less, in the entire cellulose-containing powders, is preferably 40% by volume or more, more preferably 45% by volume or more, even more preferably 50% by volume or more, and even more preferably 60% by volume or more.

<91> The cellulose-containing powder according to any one of the above <76> to <90>, wherein the content of the particles having particle sizes of exceeding 32 $\mu$m and 250 $\mu$m or less, in the entire cellulose-containing powders, is preferably 98% by volume or less, more preferably 95% by volume or less, and even more preferably 90% by volume or less.

<92> The cellulose-containing powder according to any one of the above <76> to <91>, wherein the content of the particles having particle sizes of exceeding 32 $\mu$m and 250 $\mu$m or less, in the entire cellulose-containing powders, is preferably from 40 to 98% by volume, more preferably from 45 to 95% by volume, even more preferably from 50 to 90% by volume, and even more preferably from 60 to 90% by volume.

<93> The cellulose-containing powder according to any one of the above <76> to <92>, wherein the proportion of the particles having particle sizes of exceeding 32 $\mu$m and 150 $\mu$m or less, in the entire cellulose-containing powders, is preferably 40% by volume or more, more preferably 45% by volume or more, and even more preferably 50% by volume or more.

<94> The cellulose-containing powder according to any one of the above <76> to <93>, wherein the proportion of the particles having particle sizes of exceeding 32 $\mu$m and 150 $\mu$m or less, in the entire cellulose-containing powders, is preferably 98% by volume or less, more preferably 95% by volume or less, and even more preferably 90% by volume or less.

<95> The cellulose-containing powder according to any one of the above <76> to <94>, wherein the proportion of the particles having particle sizes of exceeding 32 $\mu$m and 150 $\mu$m or less, in the entire cellulose-containing powders, is preferably from 40 to 98% by volume, more preferably from 45 to 95% by volume, and even more preferably from 50 to 90% by volume.

<96> The cellulose-containing powder according to any one of the above <76> to <95>, wherein the resin with which the cellulose-containing powder is blendable is preferably one or more members selected from polypropylene resins, polyethylene resins, polystyrene resins, polyvinyl acetate resins, polyvinyl chloride resins, polyvinylidene chloride resins, polyacrylic acid resins, polyacrylate ester resins, polybutadiene resins, polyisoprene resins, and polychloroprene resins, and more preferably the polypropylene resins.

<97> The cellulose-containing powder according to the above <96>, wherein the mixing ratio of the above resin and the cellulose-containing powder is such that the cellulose-containing powder is in an amount of preferably 5 parts by mass or more, more preferably 10 parts by mass or more, and even more preferably 15 parts by mass or more, based on 100 parts by mass of the resin.

<98> The cellulose-containing powder according to the above <96> or <97>, wherein the mixing ratio of the above resin and the cellulose-containing powder is such that the cellulose-containing powder is in an amount of preferably 70 parts by mass or less, more preferably 50 parts by mass or less, even more preferably 40 parts by mass or less, and even more preferably 30 parts by mass or less, based on 100 parts by mass of the resin.

<99> The cellulose-containing powder according to any one of the above <96> to <98>, wherein the mixing ratio of the above resin and the cellulose-containing powder is such that the cellulose-containing powder is in an amount of preferably from 5 to 70 parts by mass, more preferably from 5 to 50 parts by mass, even more preferably from 5 to 40 parts by mass, still even more preferably from 5 to 30 parts by mass, still even more preferably from 10 to 30 parts by mass, and still even more preferably from 15 to 30 parts by mass, based on 100 parts by mass of the resin.

<101> A thermoplastic resin composition containing

a thermoplastic resin (a), and

a low-crystallinity cellulose composite (b), which is a mixed and milled product of a polymer having a cellulose-affinity site and a cellulose, the cellulose composite having a cellulose I crystallinity index of -20% or more and less than 50%.

<102> The thermoplastic resin composition according to the above <101>, wherein the content of the thermoplastic resin (a) in the thermoplastic resin composition is preferably 60% by mass or more, more preferably 70% by mass or more, even more preferably 75% by mass or more, and even more preferably 80% by mass or more.

<103> The thermoplastic resin composition according to the above <101> or <102>, wherein the content of the thermoplastic resin (a) in the thermoplastic resin composition is preferably 95% by mass or less, more preferably 92.5% by mass or less, and even more preferably 90% by mass or less.

<104> The thermoplastic resin composition according to any one of the above <101> to <103>, wherein the thermoplastic resin (a) is preferably one or more members selected from the group consisting of saturated polyester-based resins, olefin-based resins, cellulose-based resins, nylon resins, vinyl chloride resins, styrene resins, vinyl ether resins, polyvinyl alcohol resins, polyamide-based resins, polycarbonate-based resins, and polysulfonate-based resins.

<105> The thermoplastic resin composition according to any one of the above <101> to <104>, wherein the olefin-based resin is preferably a polyethylene (PE resin), a polypropylene (PP resin), a polystyrene (PS resin), a polyvinyl acetate (PVAc resin), a polyvinyl chloride (PVC resin), a polyvinylidene chloride (PVDC resin), a polyacrylic acid (PA resin), a polyacrylate ester (PAE resin), a polybutadiene (PB resin), a polyisoprene (PIP resin), or a polychloroprene (PCP resin).

<106> The thermoplastic resin composition according to any one of the above <101> to <105>, wherein the content of the olefin-based resin in the thermoplastic resin (a) is preferably 60% by mass or more, more preferably 70% by mass or more, even more preferably 80% by mass or more, even more preferably 90% by mass or more, and even more preferably 95% by mass or more.

<107> The thermoplastic resin composition according to any one of the above <101> to <106>, wherein the content of the olefin-based resin in the thermoplastic resin (a) has a preferred upper limit of 100% by mass.

<108> The thermoplastic resin composition according to any one of the above <101> to <107>, wherein the polymer having a cellulose affinity site is an olefin-based polymer having at least one functional group selected from the group consisting of an acid anhydride group, a carboxyl group, an amino group, an imino group, an alkoxysilyl group, a silanol group, a silyl ether group, a hydroxyl group, and an epoxy group.

<109> The thermoplastic resin composition according to any one of the above <101> to <108>, wherein the olefin-based polymer is preferably ethylene-based polymers [high-density polyethylenes, medium-density polyethylenes, low-density polyethylenes, copolymers formed between ethylene and one or more other vinyl compounds (e.g., $\alpha$-olefin, vinyl acetate, methacrylic acid, acrylic acid, etc.), and the like], propylene-based polymers [polypropylenes, copolymers formed between propylene and one or more other vinyl compounds, and the like], ethylene-propylene copolymers, polybutene, and poly-4-methylpentene-1.

<110> The thermoplastic resin composition according to any one of the above <101> to <109>, wherein the content mass of the cellulose affinity site in the polymer having a cellulose affinity site is preferably 1% by mass or more, more preferably 3% by mass or more, and even more preferably 5% by mass or more.

<111> The thermoplastic resin composition according to any one of the above <101> to <110>, wherein the content mass of the cellulose affinity site in the polymer having a cellulose affinity site is preferably 70% by mass or less, more preferably 50% by mass or less, and even more preferably 30% by mass or less.

<112> The thermoplastic resin composition according to any one of the above <101> to <111>, wherein the weight-average molecular weight Mw of the polymer having a cellulose affinity site is preferably 5,000 or more, more preferably 7,500 or more, and even more preferably 10,000 or more.

<113> The thermoplastic resin composition according to any one of the above <101> to <112>, wherein the weight-average molecular weight Mw of the polymer having a cellulose affinity site is preferably 500,000 or less, more preferably 250,000 or less, even more preferably 150,000 or less, even more preferably 100,000 or less, and even more preferably 50,000 or less.

<114> The thermoplastic resin composition according to any one of the above <101> to <113>, wherein the melting point of the polymer having a cellulose affinity site is preferably 30°C or higher, more preferably 40°C or higher, even more preferably 60°C or higher, and even more preferably 80°C or higher.

<115> The thermoplastic resin composition according to any one of the above <101> to <114>, wherein the melting point of the polymer having a cellulose affinity site is preferably 220°C or lower, more preferably 200°C or lower, even more preferably 180°C or lower, and even more preferably 160°C or lower.

<116> The thermoplastic resin composition according to any one of the above <101> to <115>, wherein the content mass of the polymer having a cellulose affinity site, in the low-crystallinity cellulose composite (b), based on 100 parts by mass of the cellulose, i.e. the cellulose-containing raw materials, is preferably 0.1 parts by mass or more, more preferably 1 part by mass or more, even more preferably 5 parts by mass or more, even more preferably 10 parts by mass or more, and even more preferably 12 parts by mass or more.

<117> The thermoplastic resin composition according to any one of the above <101> to <116>, wherein the content mass of the polymer having a cellulose affinity site, in the low-crystallinity cellulose composite (b), based on 100 parts by mass of the cellulose, i.e. the cellulose-containing raw materials, is preferably 100 parts by mass or less, more preferably 75 parts by mass or less, even more preferably 55 parts by mass or less, even more preferably 40 parts by mass or less, and even more preferably 30 parts by mass or less.

<118> The thermoplastic resin composition according to any one of the above <101> to <117>, wherein the cellulose I crystallinity index of the cellulose-containing raw materials, i.e. the polymer having a cellulose affinity site and the cellulose to be subjected to a milling treatment, is preferably 10% or more, more preferably 30% or more, even more preferably 50% or more, and even more preferably 70% or more.

<119> The thermoplastic resin composition according to any one of the above <101> to <118>, wherein the cellulose content in the cellulose-containing raw materials is preferably 30% by mass or more, more preferably 50% by mass or more, and even more preferably 70% by mass or more.

<120> The thermoplastic resin composition according to any one of the above <101> to <119>, wherein the cellulose content in the cellulose-containing raw materials has an upper limit of preferably 100% by mass.

<121> The thermoplastic resin composition according to any one of the above <101> to <120>, wherein the water content in the cellulose-containing raw materials is preferably 0.01% by mass or more, more preferably 0.1% by mass or more, even more preferably 0.5% by mass or more, even more preferably 1.0% by mass or more, even more preferably 1.5% by mass or more, and even more preferably 2.0% by mass or more.

<122> The thermoplastic resin composition according to any one of the above <101> to <121>, wherein the water content in the cellulose-containing raw materials is preferably 50% by mass or less, more preferably 40% by mass or less, even more preferably 30% by mass or less, and even more preferably 20% by mass or less.

<123> The thermoplastic resin composition according to any one of the above <101> to <122>, wherein the water content in the cellulose-containing raw materials after the drying treatment is preferably 4.5% by mass or less, more preferably 4.0% by mass or less, even more preferably 3.5% by mass or less, and even more preferably 3.0% by mass or less.

<124> The thermoplastic resin composition according to any one of the above <101> to <123>, wherein the cellulose I crystallinity index of the low-crystallinity cellulose composite (b) is preferably -10% or more, and more preferably 0% or more.

<125> The thermoplastic resin composition according to any one of the above <101> to <124>, wherein the cellulose I crystallinity index of the low-crystallinity cellulose composite (b) is preferably 30% or less, more preferably 10% or less, and even more preferably 5% or less.

<126> The thermoplastic resin composition according to any one of the above <101> to <125>, wherein the content of the particles having particle sizes of 250 μm or more of the low-crystallinity cellulose composite (b) is preferably 30% by volume or less, more preferably 25% by volume or less, and even more preferably 20% by volume or less, of the entire powders.

<127> The thermoplastic resin composition according to any one of the above <101> to <126>, wherein the content of the particles having particle sizes of 32 μm or less of the low-crystallinity cellulose composite (b) is preferably 30% by volume or less, more preferably 25% by volume or less, and even more preferably 20% by volume or less, of the entire powders.

<128> The thermoplastic resin composition according to any one of the above <101> to <127>, wherein the average particle size of the low-crystallinity cellulose composite (b) is preferably 40 μm or more, and more preferably 50 μm or more.

<129> The thermoplastic resin composition according to any one of the above <101> to <128>, wherein the average particle size of the low-crystallinity cellulose composite (b) is preferably 150 μm or less, and more preferably 100

μm or less.

<130> The thermoplastic resin composition according to any one of the above <101> to <129>, wherein the content of the low-crystallinity cellulose composite (b) in the thermoplastic resin composition is preferably 5 parts by mass or more, more preferably 10 parts by mass or more, and even more preferably 15 parts by mass or more, based on 100 parts by mass of the thermoplastic resin.

<131> The thermoplastic resin composition according to any one of the above <101> to <130>, wherein the content of the low-crystallinity cellulose composite (b) in the thermoplastic resin composition is preferably 70 parts by mass or less, more preferably 50 parts by mass or less, even more preferably 40 parts by mass or less, and even more preferably 30 parts by mass or less, based on 100 parts by mass of the thermoplastic resin.

<132> The thermoplastic resin composition according to any one of the above <101> to <131>, wherein the content of the low-crystallinity cellulose composite (b) in the thermoplastic resin composition is preferably 4% by mass or more, more preferably 9% by mass or more, and even more preferably 13% by mass or more.

<133> The thermoplastic resin composition according to any one of the above <101> to <132>, wherein the content of the low-crystallinity cellulose composite (b) in the thermoplastic resin composition is preferably 41% by mass or less, more preferably 33% by mass or less, even more preferably 29% by mass or less, and even more preferably 23% by mass or less.

<134> The thermoplastic resin composition according to any one of the above <101> to <133>, wherein in the thermoplastic resin composition, preferably a crystal nucleating agent is further used, wherein the crystal nucleating agent is preferably inorganic crystal nucleating agents such as natural or synthetic silicate compounds, titanium oxide, barium sulfate, calcium tripolyphosphate, calcium carbonate, sodium phosphate, kaolinite, halloysite, talc, smectite, vermiculite, and mica; and organic crystal nucleating agents such as amides, metal salts of organic acids, sorbitol derivatives, and nonitol derivatives.

<135> The thermoplastic resin composition according to any one of the above <101> to <134>, wherein the content of the crystal nucleating agent is preferably 0.1 parts by mass or more, more preferably 0.3 parts by mass or more, and even more preferably 0.5 parts by mass or more, based on 100 parts by mass of the thermoplastic resin.

<136> The thermoplastic resin composition according to any one of the above <101> to <135>, wherein the content of the crystal nucleating agent is preferably 12 parts by mass or less, more preferably 10 parts by mass or less, even more preferably 5 parts by mass or less, even more preferably 3 parts by mass or less, and even more preferably 1.5 parts by mass or less, based on 100 parts by mass of the thermoplastic resin.

<137> The thermoplastic resin composition according to any one of the above <101> to <136>, wherein the content of the crystal nucleating agent in the thermoplastic resin composition is preferably 0.04% by mass or more, more preferably 0.25% by mass or more, and even more preferably 0.4% by mass or more.

<138> The thermoplastic resin composition according to any one of the above <101> to <137>, wherein the content of the crystal nucleating agent in the thermoplastic resin composition is preferably 17% by mass or less, more preferably 11% by mass or less, preferably 9% by mass or less, more preferably 5% by mass or less, even more preferably 3% by mass or less, and even more preferably 1.5% by mass or less.

<139> The thermoplastic resin composition according to any one of the above <101> to <138>, wherein the thermoplastic resin composition preferably further contains, as optional additives, a plasticizer; a filler including an inorganic filler and an organic filler; a hydrolysis inhibitor; a flame retardant; an antioxidant; a lubricant such as a hydrocarbon wax or an anionic surfactant; an ultraviolet absorbent; an antistatic agent; an anti-clouding agent; a photostabilizer; a pigment; a mildewproof agent; a bactericidal agent; a blowing agent; a surfactant; a polysaccharide such as starch or alginic acid; a natural protein such as gelatin, glue, or casein; an inorganic compound such as tannin, zeolite, ceramics, or metal powder; a perfume; a fluidity modulator; a leveling agent; an electroconductive agent; an ultraviolet dispersant; a deodorant; other polymeric materials or other resin compositions.

<140> The thermoplastic resin composition according to any one of the above <101> to <139>, wherein the content proportion of the optional additive in the thermoplastic resin composition is preferably 20% by mass or less, more preferably 10% by mass or less or so, and even more preferably 5% by volume or less or so.

<141> The thermoplastic resin composition according to any one of the above <101> to <140>, which is suitably used in daily sundries, household electric appliance parts, automobile parts, and the like.

<142> The thermoplastic resin composition according to any one of the above <101> to <141>, wherein the cellulose composite (b) is a cellulose-containing powder produced by the method as defined in any one of the above <1> to <75>.

<143> The thermoplastic resin composition according to any one of the above <101> to <141>, wherein the cellulose composite (b) is a cellulose-containing powder as defined in any one of the above <76> to <99>.

<144> A method for producing a resin composition, including blending
a thermoplastic resin (a), and
a low-crystallinity cellulose composite (b) having a cellulose I crystallinity index of -20% or more and less than 50%, in which

a polymer having a cellulose affinity site and

a cellulose

are previously subjected to a milling treatment.

<145> The method according to the above <144>, wherein the raw materials further containing, besides the thermoplastic resin (a) and the low-crystallinity cellulose composite (b), optionally various additives are mixed at a temperature of preferably 180°C or higher, more preferably 190°C or higher, and even more preferably 200°C or higher.

<146> The method according to the above <144> or <145>, wherein the raw materials further containing, besides the thermoplastic resin (a) and the low-crystallinity cellulose composite (b), optionally various additives are mixed at a temperature of preferably 300°C or lower, more preferably 290°C or lower, and even more preferably 280°C or lower.

<147> The method according to any one of the above <144> to <146>, wherein the mixing time of the raw materials is preferably 15 seconds or more.

<148> The method according to any one of the above <144> to <147>, wherein the mixing time of the raw materials is preferably 900 seconds or less.

<149> The method according to any one of the above <144> to <148>, wherein the cellulose composite (b) is a cellulose-containing powder produced by the method as defined in any one of the above <1> to <75>.

<150> The method according to any one of the above <144> to <148>, wherein the cellulose composite (b) is a cellulose-containing powder as defined in any one of the above <76> to <99>.

<151> A molded article containing a thermoplastic resin composition as defined in any one of the above <101> to <143>, and <163>.

<152> The molded article according to the above <151>, wherein the molded article is preferably in a sheet form, wherein its thickness is preferably 0.05 mm or more, more preferably 0.1 mm or more, and even more preferably 0.15 mm or more.

<153> The molded article according to the above <151> or <152>, wherein the molded article is in a sheet form, wherein its thickness is preferably 1.5 mm or less, more preferably 1.0 mm or less, and even more preferably 0.5 mm or less.

<154> The molded article according to the above any one of the above <151> to <153>, which can be suitably used as wrapping materials for daily sundries, cosmetics, household electric appliances, and the like; food containers such as blistered packs and trays, and lids for lunch boxes; industrial trays used in transportation or protections of industrial parts; and the like.

<155> A low-crystallinity cellulose composite (b) which is a mixed and milled product of a polymer having a cellulose-affinity site and a cellulose, wherein the cellulose I crystallinity index is -20% or more and less than 50%.

<156> The low-crystallinity cellulose composite (b) according to the above <155>, wherein the weight-average molecular weight Mw of the polymer having a cellulose affinity site is preferably 5,000 or more, more preferably 7,500 or more, and even more preferably 10,000 or more.

<157> The low-crystallinity cellulose composite (b) according to the above <155> or <156>, wherein the weight-average molecular weight Mw of the polymer having a cellulose affinity site is preferably 500,000 or less, more preferably 250,000 or less, even more preferably 100,000 or less, and even more preferably 50,000 or less.

<158> The low-crystallinity cellulose composite (b) according to any one of the above <155> to <157>, wherein the cellulose I crystallinity index of the low-crystallinity cellulose composite (b) is preferably -10% or more, and more preferably 0% or more.

<159> The low-crystallinity cellulose composite (b) according to any one of the above <155> to <158>, wherein the cellulose I crystallinity index of the low-crystallinity cellulose composite (b) is preferably 30% or less, more preferably 10% or less, and even more preferably 5% or less.

<160> The low-crystallinity cellulose composite (b) according to any one of the above <155> to <159>, wherein the content mass of the polymer having a cellulose affinity site, in the low-crystallinity cellulose composite (b) is preferably 0.1 parts by mass or more, more preferably 1 part by mass or more, even more preferably 5 parts by mass or more, even more preferably 10 parts by mass or more, and even more preferably 12 parts by mass or more, based on 100 parts by mass of the cellulose, i.e., the cellulose-containing raw materials.

<161> The low-crystallinity cellulose composite (b) according to any one of the above <155> to <160>, wherein the content mass of the polymer having a cellulose affinity site, in the low-crystallinity cellulose composite (b) is preferably 100 parts by mass or less, more preferably 75 parts by mass or less, even more preferably 55 parts by mass or less, even more preferably 40 parts by mass or less, and even more preferably 30 parts by mass or less, based on 100 parts by mass of the cellulose, i.e., the cellulose-containing raw materials.

<162> The low-crystallinity cellulose composite (b) according to any one of the above <155> to <161>, wherein the cellulose I crystallinity index of the cellulose-containing raw materials, i.e., a polymer having a cellulose affinity site and the cellulose subjected to a milling treatment, is preferably 10% or more, more preferably 30% or more, even more preferably 50% or more, and even more preferably 70% or more.

<163> The resin composition according to the above any one of the above <101> to <143>, wherein the polymer having a cellulose affinity site is (A) a high-molecular weight compound having an acid anhydride.

<164> The method according to any one of the above <144> to <150>, wherein the polymer having a cellulose affinity site is (A) a high-molecular weight compound having an acid anhydride.

EXAMPLES

The present invention will be described more specifically by means of the following Examples and Comparative Examples, without intending to limit the present invention to the following Examples. Parts in Examples are parts by mass unless specified otherwise. Here, "ambient pressure (atmospheric pressure)" refers to a pressure of 101.3 kPa, and "ambient temperature (room temperature)" refers to a temperature of 25°C.

[Particle Size Distribution of Cellulose-Containing Powder]

The particle sizes of the cellulose-containing powder are determined according to sieve classification, and a particle size distribution is determined using a vibratory sieve shaker AS-200 manufactured by Retsch GmbH by classification with a test sieve having an opening of 250 $\mu$m, a test sieve having an opening of 150 $\mu$m, and a test sieve having an opening of 32 $\mu$m, each of the test sieves being defined by JIS Z 8801. Particle sizes are defined as follows: The powders that remain on the test sieve having an opening of 250 $\mu$m are defined to have particle sizes such that "particles have particle sizes of exceeding 250 $\mu$m," the powders that go through the test sieve having an opening of 150 $\mu$m but remain on the test sieve having an opening of 32 $\mu$m are defined to have particle sizes such that "particles have particle sizes of exceeding 32 $\mu$m and 150 $\mu$m or less," and the powders that pass through the test sieve of 32 $\mu$m are defined to have particle sizes such that "particles have particle sizes of 32 $\mu$m or less." Further, the proportion (% by volume) of the particles having particle sizes such that "the particles have particle sizes of exceeding 32 $\mu$m and 250 $\mu$m or less" is a value obtained by the formula of:

$$100\% \text{ by volume-(``particles having particle sizes of exceeding 250 } \mu\text{m, \%}$$
$$\text{by volume'')-(``particles having particle sizes of 32 } \mu\text{m or less, \% by}$$
$$\text{volume''),}$$

where the entire cellulose-containing powders are defined as 100% by volume. Here, each of the test sieves mentioned above is utility models manufactured by Iida-seisakusho Japan Corporation.

[Average Particle Size and Particle Size Distribution of Cellulose]

The average particle size and the particle size distribution are determined with a laser diffraction/scattering particle size distribution analyzer "LA-920" manufactured by HORIBA, Ltd. The measurement conditions are such that a treatment with ultrasonication is carried out for one minute, and that water is used as a dispersion medium during the determination to determine a median diameter on a volume basis at a temperature of 25°C.

[Water Content of Cellulose]

Using an infrared moisture balance (an analyzer of change in mass due to moisture loss over heating and drying), MOC-120H, manufactured by Shimadzu Corporation, measurements with a one-gram sample are taken in a thermostat held at 150°C every 30 seconds, and a value of a weight loss from an initial value at a time point where a weight loss is 0.1% or less of a found value obtained immediately before the determination is defined as a water content.

[Melting Point of Additive or Polymer]

The melting point is measured with a DSC apparatus Diamond DSC, manufactured by Perkin-Elmer, by heating from 20°C to 500°C at a heating rate of 10°C/minute.

[Weight-Average Molecular Weight of Additive or Polymer]

The weight-average molecular weight Mw is determined in accordance with GPC (gel permeation chromatography), under the following measurement conditions.

< Measurement Conditions >

Column: Shodex HT-806M × one column + Shodex HT-803 × two columns, manufactured by SHOWA DENKO CORPORATION
Column temperature: 130°C
Detector: RI
Eluent: o-dichlorobenzene
Flow rate: 1.0 mL/min
Sample concentration: 1 mg/mL
Amount injected: 0.1 mL
Calculated standards: polystyrenes

[Median Diameter of Cellulose-Containing Powder]

With respect to the cellulose-containing powder, an average particle size (a median diameter on a volume basis) is determined in a dry state with a laser diffraction scattering method particle size distribution analyzer, Model No.: LS13 320, manufactured by Beckman Coulter, Inc.

Examples 1-1 to 1-5 and Comparative Example 1-3

(Cellulose Treatment)

[Cutting Treatment]

Cellulose-containing raw material sheet-like wood pulp "HV+," manufactured by Tembec Inc., having dimensions of 800 mm × 600 mm × 1.0 mm, a crystallinity index of 81%, an $\alpha$-cellulose content of 96% by mass, and a water content of 8.0% by mass was placed over a sheet pelletizer "SG(E)-220" manufactured by HORAI Co., Ltd., which is a slit cutter, to cut into rectangular parallelepipeds having sizes of about 3 mm × 1.5 mm × 1.0 mm.

[Drying Treatment]

Chipped cellulose-containing raw materials obtained by the cutting treatment were dried using a twin-screw horizontal agitation dryer, a twin-screw paddle dryer "NPD-1.6W(1/2)" manufactured by NARA MACHINERY CO., LTD. The drying temperature was set at 140°C, the dryer was previously charged with 8 kg of the above raw materials, and the raw materials were dried in a 60-minute batch process at the atmospheric pressure to adjust the water content of the above raw materials to 0.8% by mass. Thereafter, the dryer was tilted at an angle of 2°, and the above raw materials were dried in a continuous treatment. At this time the feeding rate of the above raw materials was 18 kg/h. The water content of the above dried raw materials obtained by the continuous treatment was also 0.8% by mass. The above raw materials obtained after the drying treatment were stored in a bag made of aluminum up to a point immediately before a milling treatment in order to prevent the moisture absorption during the storage. The cellulose I crystallinity index of the raw materials after the drying treatment as calculated from X-ray diffraction intensity was 81%.

[Milling Treatment]

In an internal of a vessel of a batch-type vibrating mill "MB-1," manufactured by CHUO KAKOHKI CO., LTD, having a vessel inner diameter of 142 mm, a length in a shaft direction of the space of the cylinder of the internal of the vessel of 220 mm, and a vessel capacity of 3.6 L were placed 13 cylindrical media made of stainless steel having a diameter of 30 mm and a length of 211 mm to carry out milling. Based on 100 parts by mass of the chipped cellulose-containing raw materials obtained by the drying treatment (apparent specific gravity (slightly harder): 0.18 g/mL), the additives listed in Tables 1 and 2 were added in amounts as shown in Tables 1 and 2, and the milling was carried out by operating under the conditions that the time was as listed in Tables 1 and 2, and that the vibration mill was oscillated at a width of 8 mm and a frequency of 20 Hz, to provide each of low-crystallinity celluloses. Here, the total mass of the cellulose-containing raw materials and the additive in the internal of the vessel was 100 g.

(Resin Compositions)

Composition raw materials shown in Tables 1 and 2, in other words, a low-crystallinity cellulose and a resin were combined as shown in Tables 1 and 2, and a mixture was melt-kneaded with a kneader Labo-plastomill, manufactured by TOYO SEIKI SEISAKU-SHO at a rotational speed of 90 rpm, at 200°C for 8 minutes, to provide each of the resin compositions.

(Molded Articles)

A resin composition obtained was injection-molded with an injection-molding machine J110AD-180H manufactured by The Japan Steel Works, Ltd., cylinder temperatures set at 6 locations, of which cylinder temperature was set at 270°C for the sections up to fifth units from the nozzle end side, at 230°C for the remaining one unit, and at 45°C for the section below the hopper. With a mold temperature set to 80°C, flat plate test pieces having dimensions of 127 mm $\times$ 12.7 mm $\times$ 1.6 mm were molded, to provide a molded article made of the resin composition.

Example 1-6

The milling treatment was carried out in the same manner as in Example 1-1, except that a powder cellulose having a median diameter of 31.4 $\mu$m was used in place of the chipped cellulose-containing raw materials as the raw material cellulose. Also, the same procedures as in Example 1-1 were carried out using the composition raw materials listed in Table 1, to provide a resin composition and a molded article made thereof.

Comparative Examples 1-1 to 1-2

In the cellulose treatment of Example 1-2 or Example 1-5, the milling treatment was carried out without adding any additives. Next, the same procedures as in Example 1-1 were carried out using as the composition raw materials, a cellulose subjected to a milling treatment ("Milled Cellulose Without Additives (milled cellulose without mixing)" in Table 2), a resin, and an additive were used as shown in Table 2, to provide each of resin compositions and molded articles made thereof.

Comparative Example 1-4

As a raw material cellulose, the chips used in Example 1-1 that were further milled with a coffee mill into a fibrous form were used in place of chipped cellulose-containing raw materials. In addition, as the milling apparatus, a planetary ball-mill (Model P-6 manufactured by FRITSCH, containing 100 alumina balls having a diameter of 10 mm as media, a total of a milled product being 40 g) was used, and a milling treatment was carried out at a rotational speed of 250 rpm repeatedly for 24 cycles, one cycle comprising 50 minutes milling, and 10 minutes halting, using composition raw materials as listed in Table 2, to provide a resin composition and a molded article made thereof in the same manner as in Example 1-1.

Here, the raw materials in Tables 1 and 2 are as follows.

< Additives >

Umex 1001: manufactured by Sanyo Chemical Industries, Ltd., maleic anhydride-modified polypropylene, weight-average molecular weight:

40,000, melting point: 142°C
OREVAC G CA 100: manufactured by ARKEMA, maleic anhydride-modified polypropylene, weight-average molecular weight: 116,000, melting point: 161°C
ASAN-PT: manufactured by Kao Corporation, dodecenylsuccinic anhydride, molecular weight: 266
Z-6011: manufactured by Dow Corning-Toray Co., Ltd., 3-aminopropyltriethoxysilane

< Resins >

PP: polypropylene resin, manufactured by Nippon Polypropylene Corporation, trade name: Novatec PP EA9
PE: polyethylene resin, manufactured by Nippon Polyethylene
Corporation, trade name: Novatec LL UF641

The properties of the molded articles obtained were evaluated in accordance with the method of the following Test Example 1-1. The results are shown in Tables 1 and 2.

Test Example 1-1

A tensile test was carried out using five of the molded articles obtained in a thermostatic chamber held at 25°C to examine a tensile modulus, GPa, a tensile strain at break, %, and a stress at an yield point, MPa. Here, in the tensile test a 5-score test was carried out for each sample in accordance with JIS K7127, with an autograph precise tensile tester AGS-10kNX manufactured by SHIMADZU Corporation, and an average was defined as a measurement value, and measurement values of five samples were averaged. Here, although the physical properties cannot be unconditionally determined because the physical properties depends upon the components of the constituting resins. It can be judged that the resin shows excellent rigidity when the tensile modulus of the kind of the resin that is composed of PP is 1.9 GPa or more, and that the resin shows excellent toughness, when the stress at an yield point of the kind of the resin that is composed of PP is 35 MPa or more or the stress at an yield point of the kind of the resin that is composed of PE is 11 MPa or more, or when the tensile strain at break of the kind of the resin that is composed of PP is 4% or more or the tensile strain at break of the kind of the resin that is composed of PE is 50% or more.

[Table 1]

Table 1

| | | Ex. 1-1 | Ex. 1-2 | Ex. 1-3 | Ex. 1-4 | Ex. 1-5 | Ex. 1-6 |
|---|---|---|---|---|---|---|---|
| Crystallinity Index (%) Before Milling Treatment | | 81 | 81 | 81 | 81 | 81 | 69 |
| State (of Cellulose) Before Milling Treatment | | Chips | Chips | Chips | Chips | Chips | Powder |
| Additives Used in Milling Treatment | Kind | Umex 1001 | Umex 1001 | OREVAC CA100 | Z-6011 | ASAN-PT | Umex 1001 |
| | Amount, Parts by Mass, Based on 100 Parts by Mass of Cellulose-Containing Raw Materials | 15 | 15 | 15 | 1 | 1 | 15 |
| Milling Treatment Apparatus | | Vibration Mill | Vibration Mill | Vibration Mill | Vibration Mill | Vibration Mill | Vibration Mill |
| Milling Treatment Time, minutes | | 10 | 60 | 60 | 10 | 60 | 10 |
| Crystallinity Index, %, After Milling Treatment | | 40.2 | 2.6 | -16.7 | 46.2 | -0.7 | 29.9 |
| Difference in Crystallinity Indices, % | | 40.8 | 78.4 | 97.7 | 34.8 | 81.7 | 39.1 |
| Median Diameter, $\mu$m | | 306.5 | 87.38 | 123.3 | 65.83 | 90.2 | 127.5 |
| Particle Proportions, % by Volume | Particles having particle sizes of exceeding 250 $\mu$m | 48.0 | 15.8 | 11.0 | 12.8 | 2.0 | 35.9 |
| | Particles having particle sizes of exceeding 32 $\mu$m and 250 $\mu$m or less | 51.9 | 82.9 | 88.7 | 84.3 | 96 | 55.3 |
| | Particles having particle sizes of exceeding 32 $\mu$m and 150 $\mu$m or less | Undeterminable | 75.2 | 66.2 | Undeterminable | 85.4 | Undeterminable |
| | Particles having particle sizes of 32 $\mu$m or less | 0.1 | 1.3 | 0.3 | 2.9 | 2.0 | 8.8 |
| Kind of Resins | | PP | PP | PP | PP | PE | PP |
| Resin Content, Parts by Mass | | 100 | 100 | 100 | 100 | 100 | 100 |
| Content of Milled Cellulose with Additives, Parts by Mass | | 10 | 10 | 10 | 10 | 20 | 10 |
| Content of Milled Cellulose Without Additives, Parts by Mass | | 0 | 0 | 0 | 0 | 0 | 0 |
| Kind of Additives | | - | - | - | - | - | - |

(continued)

|  | Ex. 1-1 | Ex. 1-2 | Ex. 1-3 | Ex. 1-4 | Ex. 1-5 | Ex. 1-6 |
|---|---|---|---|---|---|---|
| Additive Content, Parts by Mass | 0 | 0 | 0 | 0 | 0 | 0 |
| Tensile Modulus, Gpa | 2.03 | 2.10 | 2.01 | 2.04 | 0.94 | 2.02 |
| Stress at Yield Point, Mpa | 40.1 | 38.9 | 39.2 | 36.3 | 14 | 39.1 |
| Tensile Strain at Break, % | 4.9 | 7.1 | 7.8 | 4.5 | 390 | 5.9 |

[Table 2]

Table 2

| | | Comp. Ex. 1-1 | Comp. Ex. 1-2 | Comp. Ex. 1-3 | Comp. Ex. 1-4 |
|---|---|---|---|---|---|
| Crystallinity Index (%) Before Milling Treatment | | 81 | 81 | 81 | 81 |
| State (of Cellulose) Before Milling Treatment | | Chips | Chips | Chips | Fibrous |
| Additives Used in Milling Treatment | Kind | - | - | Umex 1001 | Umex 1001 |
| | Amount, Parts by Mass, Based on 100 Parts by Mass of Cellulose-Containing Raw Materials | 0 | 0 | 15 | 15 |
| Milling Treatment Apparatus | | Vibration Mill | Vibration Mill | Vibration Mill | Planetary Ball Mill |
| Milling Treatment Time, minutes | | 60 | 60 | 5 | (Note 1) |
| Crystallinity Index, %, After Milling Treatment | | -34.3 | -34.3 | 56.2 | 52.8 |
| Difference in Crystallinity Indices, % | | 115.3 | 115.3 | 24.8 | 28.2 |
| Median Diameter, $\mu$m | | 41.83 | 41.83 | (Note 2) | 32.7 |
| Particle Proportions, % by Volume | Particles having particle sizes of exceeding 250 $\mu$m | 0.2 | 0.2 | 86.8 | 1.5 |
| | Particles having particle sizes of exceeding 32 $\mu$m and 250 $\mu$m or less | 87.3 | 87.3 | 12.8 | 76.6 |
| | Particles having particle sizes of exceeding 32 $\mu$m and 150 $\mu$m or less | 86.2 | 86.2 | Undeterminable | Undeterminable |
| | Particles having particle sizes of 32 $\mu$m or less | 12.5 | 12.5 | 0.4 | 21.9 |
| Kind of Resins | | PP | PE | PP | PP |
| Resin Content, Parts by Mass | | 100 | 100 | 100 | 100 |
| Content of Milled Cellulose with Additives, Parts by Mass | | 0 | 0 | 10 | 10 |
| Content of Milled Cellulose Without Additives, Parts by Mass | | 8.7 | 19.8 | 0 | 0 |
| Kind of Additives | | Umex 1001 | ASAN-PT | - | - |
| Additive Content, Parts by Mass | | 1.3 | 0.2 | 0 | 0 |
| Tensile Modulus, Gpa | | 1.60 | 0.80 | (Note 3) | 1.77 |
| Stress at Yield Point, Mpa | | 34.0 | 10.9 | (Note 3) | 39.5 |
| Tensile Strain at Break, % | | 4.6 | 30.0 | (Note 3) | 6.0 |

(Note 1): The cycles described in Comparative Example 1-4 were carried out.
(Note 2): Since coarse particles were present, the median diameter could not be determined.
(Note 3): Since coarse particles were confirmed on the surface of the resin composition, the external appearance as a manufactured product was poor, so that the evaluation of the molded articles was not made.

It can be seen from Tables 1 and 2, and the comparisons between Example 1-2 and Comparative Example 1-1, and the comparisons between Example 1-5 and Comparative Example 1-2 that even if the components of the resin compositions were the same, Example 1-2 or Example 1-5 including a milling treatment of a cellulose in the presence of an additive has a higher rigidity and excellent toughness of the molded article of the resin composition. In Comparative Example 1-3, in order to prepare a product having a cellulose I crystallinity index of 50% or more after the milling treatment, the milling treatment was shortened than those of Examples. As a result, in Comparative Example 1-3, since the milled powders were coarse and clogging within the apparatus was generated, the median diameter could not be determined. In addition, one formed into a composite with a resin was found to have coarse particles that can be visually confirmed on the surface of the resin.

Example 2-1

[Cutting Treatment]

Cellulose-containing raw material sheet-like wood pulp "HV+," manufactured by Tembec, Inc., having dimensions of 800 mm × 600 mm × 1.0 mm, a crystallinity index of 82%, an α-cellulose content of 96% by mass, and a water content of 8.0% by mass was placed over a sheet pelletizer "SG(E)-220" manufactured by HORAI Co., Ltd., which is a slit cutter, to cut into rectangular parallelepiped having sizes of about 3 mm × 1.5 mm × 1.0 mm.

[Drying Treatment]

Chipped cellulose-containing raw materials obtained by the cutting treatment were dried using a twin-screw horizontal agitation dryer, a twin-screw paddle dryer "NPD-1.6W(1/2)" manufactured by NARA MACHINERY CO., LTD. The drying temperature was set at 140°C, the dryer was previously charged with 8 kg of the above raw materials, and the raw materials were dried in a 60-minute batch process at the atmospheric pressure to adjust the water content of the above raw materials to 0.8% by mass. Thereafter, the dryer was tilted at an angle of 2°, and the above raw materials were dried in a continuous treatment. At this time the feeding rate of the above raw materials was 18 kg/h. The water content of the above dried raw materials obtained by the continuous treatment was also 0.8% by mass. The above raw materials obtained after the drying treatment were stored in a bag made of aluminum up to a point immediately before a milling treatment in order to prevent the moisture absorption during the storage. The cellulose I crystallinity index of the above raw materials after the drying treatment as calculated from X-ray diffraction intensity was 81%.

[Milling Treatment]

In an internal of a vessel of a batch-type vibrating mill "MB-1," manufactured by CHUO KAKOHKI CO., LTD, having a vessel inner diameter of 142 mm, a length in a shaft direction of the space of the cylinder of the internal of the vessel of 220 mm, and a vessel capacity of 3.6 L were placed 13 cylindrical media made of stainless steel having a diameter of 30 mm and a length of 211 mm to carry out milling. Sixty-seven grams of the chipped cellulose-containing raw materials obtained by the drying treatment (apparent specific gravity (slightly harder): 0.18g/mL), and 33 g of a maleic anhydride-modified polypropylene "Umex 1001," manufactured by Sanyo Chemical Industries, Ltd., MA-PP, weight-average molecular weight: 40,000, melting point: 142°C as an additive, and the milling was carried out for 30 minutes. The vibration mill was operated under the conditions of an oscillation of 8 mm and a frequency of 20 Hz, to provide each of low-crystallinity cellulose composites, which are mixed and milled products of the polymer and the cellulose.

(Resin Compositions)

Twenty-five parts by mass of a low-crystallinity cellulose composite and 100 parts by mass of a thermoplastic resin were melt-kneaded with a kneader Labo-plastomill, manufactured by TOYO SEIKI SEISAKU-SHO at a rotational speed of 90 rpm, at 200°C for 8 minutes, to provide each of the resin compositions.

(Sheets)

Resin composition pellets obtained were sandwiched between metal plates together with a spacer having dimensions of 21 cm × 21 cm × 0.4 mm, pressed with an autopresser, manufactured by TOYO SEIKI SEISAKU-SHO, at 200°C and 0.5 MPa for 2 minutes, and then pressed at 200°C and 20 MPa for 2 minutes, thereby providing a pressed sheet.

Example 2-2

The same procedures as in Example 2-1 were carried out except for changing to 80 g of the chipped cellulose-containing raw materials (apparent specific gravity (slightly harder): 0.18 g/mL) during the cellulose milling treatment, and 20 g of the maleic-anhydride-modified polypropylene (Umex 1001) as an additive, to provide a low-crystallinity cellulose composite. In addition, a resin composition and a sheet thereof were prepared in the same manner as in Example 2-1.

Example 2-3

The same procedures as in Example 2-1 were carried out except for changing to 86 g of the chipped cellulose-containing raw materials (apparent specific gravity (slightly harder): 0.18 g/mL) during the cellulose milling treatment, and 14 g of the maleic-anhydride-modified polypropylene (Umex 1001) as an additive, to provide a low-crystallinity cellulose composite. In addition, a resin composition and a sheet thereof were prepared in the same manner as in Example 2-1.

Example 2-4

The same procedures as in Example 2-1 were carried out except for changing to 80 g of the chipped cellulose-containing raw materials (apparent specific gravity (slightly harder): 0.18 g/mL) during the cellulose milling treatment, and 20 g of a poly(ethylene-glycidyl methacrylate) copolymer "Bondfast E," manufactured by SUMITOMO CHEMICAL CO., LTD., BF-E, weight-average molecular weight: 35,000, melting point: 103°C, to provide a low-crystalline cellulose composite. In addition, a resin composition and a sheet thereof were prepared in the same manner as in Example 2-1.

Examples 2-5 to 2-7 and Comparative Examples 2-1 to 2-4

The same procedures as in Example 2-1 were carried out except that the raw materials as listed in Table 3 were used, to prepare each of resin compositions and sheets thereof.

Example 2-8

The same procedures as in Example 2-5 were carried out, to provide a low-crystallinity cellulose composite. Here, in Example 2-8, the cellulose corresponds to a filler.

(Resin Compositions)

The low-crystalline cellulose composite obtained and a thermoplastic resin (and further an inorganic filler in Comparative Examples 2-10 and 2-11) were melt-kneaded in parts by mass shown in Table 4 with a twin-screw kneader TEX28, manufactured by The Japan Steel Works, Ltd. at a rotational speed of 250 rpm, a heater temperature of 200°C, and a discharge rate of 18 kg/h, to provide each of the resin compositions. Using the resin compositions obtained, molded articles were obtained in accordance with Test Example 2-2 and Test Example 2-3.

Comparative Examples 2-5 and 2-6

In an internal of a vessel of a batch-type vibrating mill "MB-1," manufactured by CHUO KAKOHKI CO., LTD, having a vessel inner diameter of 142 mm, a length in a shaft direction of the space of the cylinder of the internal of the vessel of 220 mm, and a vessel capacity of 3.6 L were placed 13 cylindrical media made of stainless steel having a diameter of 30 mm and a length of 211 mm to carry out milling as follows. Specifically, 50 g of the chipped cellulose-containing raw materials obtained by the drying treatment of Example 2-1 (apparent specific gravity (slightly harder): 0.18 g/mL) was added, and the milling was carried out for 40 minutes. The vibration mill was operated under conditions of an oscillation of 8 mm and a frequency of 20 Hz, to provide each of low-crystallinity celluloses. Next, 10 parts by mass of Umex 1010 was added to this mill, based on 100 parts by mass of the low-crystallinity cellulose, and the mill was operated for 15 minutes under the same operating conditions, to provide a low-crystallinity cellulose composite. A resin composition and a sheet thereof were prepared in the same manner as in Example 2-1.

Comparative Examples 2-7 and 2-8

One gram of stearic acid was added to 50 g of the chipped cellulose-containing raw materials obtained by the drying treatment of Example 2-1 (apparent specific gravity (slightly harder): 0.18 g/mL). First, a mixture was subjected to a reduced pressure drying at 40°C, to remove water adsorbed of the cellulose-containing raw materials to 0.1% by mass or less. The sample (51g) was made into smaller particle sizes with a planetary ball-mill manufactured by FRITSCH, beads made of zirconia having a diameter ($\Phi$) of 5 mm. Seventy-two cycles of operations were repeatedly carried out continuously with the planetary ball mill at a rotational speed of 200 rpm, one cycle comprising 10 minute milling and 10 minutes halting, to provide each of low-crystallinity cellulose composites. A resin composition and a sheet thereof were prepared in the same manner as in Example 2-1.

Comparative Examples 2-9 to 2-11

The same procedures as in Example 2-8 were carried out except that the low-crystallinity cellulose composite was not used (Comparative Example 2-9), or talc shown in Table 4 was used in place of the low-crystallinity cellulose composite (Comparative Examples 2-10 and 2-11), to produce each of resin compositions and molded articles thereof.

Comparative Examples 2-12 and 2-13

The same procedures as in Example 2-8 were carried out except that glass fibers were added with a side feeder in place of the low-crystallinity cellulose composite when melt-kneading was carried out, to produce each of resin compositions and molded articles thereof.

Here, the raw materials in Tables 3 and 4 are as follows.

< Thermoplastic Resin >

Polyethylene Resin: manufactured by Nippon Polyethylene Corporation, Novatec LL UF641
Polypropylene Resin (EA9): manufactured by Nippon Polypropylene Corporation, Novatec PP EA9
Polypropylene Resin (MA3): manufactured by Nippon Polypropylene Corporation, Novatec PP MA3

< Crystallinity Cellulose Particles >

KC FLOCK: manufactured by NIPPON PAPER CHEMICALS CO., LTD., crystallinity cellulose particles, cellulose I crystallinity index: 78.5%, median diameter: 28 $\mu$m

< Inorganic Filler >

Talc: MICROACE P-6, manufactured by Nippon Talc Co., Ltd.
Glass Fibers: T-480, manufactured by Nippon Electric Glass Co., Ltd.

< Compatibilizing Agent >

Umex 1001: manufactured by Sanyo Chemical Industries, Ltd., maleic anhydride-modified polypropylene, weight-average molecular weight: 40,000, melting point: 142°C, content mass of cellulose affinity site: 5% by mass
Bondfast-E (BF-E): manufactured by SUMITOMO CHEMICAL CO., LTD., poly(ethylene-polyglycidyl methacrylate) copolymer, weight-average molecular weight: 35,000, melting point: 103°C, content mass of cellulose affinity site: 12% by mass
Umex 1010: manufactured by Sanyo Chemical Industries, Ltd., maleic acid-modified polypropylene, weight-average molecular weight: 30,000, melting point: 141°C
Stearic Acid: manufactured by Aldrich, molecular weight: 284.48
Among the above compatibilizing agents, Umex 1001 and Bondfast-E fall under "polymers having cellulose affinity sites" as used herein.

< Crystal Nucleating Agent >

GEL ALL MDLM30G: manufactured by New Japan Chemical Co., Ltd., 1,3 :2,4-bis-O-(4-methylbenzylidene)-D-sorbitol
NA-11: manufactured by ADEKA, a metal salt of phosphoric ester, "ADK STAB NA-11"
The properties of the sheets or molded articles were evaluated in accordance with the following methods of Test Examples 2-1 to 2-4. The results are shown in Tables 3 and 4.

Test Example 2-1 - Improving Rate of Strain at Break and Improving Rate of Elastic Modulus

A tensile test was carried out in a thermostatic chamber held at 25°C using five No. 5 test pieces in accordance with JIS K7127 previously prepared from the sheets obtained to examine a tensile modulus, GPa, and a tensile strain at break, %. The improving rate of the strain at break and the improving rate of the elastic modulus were obtained from the following formulas (I) and (II). In the tensile test, a five-score test was carried out in accordance with JIS K7127, with an autograph precision tensile tester AGS-10KNX, manufactured by SHIMADZU Corporation. It is shown that the larger the numerical value of the improving rate of the strain at break, the more excellent the toughness, and that the larger the numerical value of the improving rate of the elastic modulus, the more excellent the rigidity. In addition, if the tensile elastic modulus is 0.9 GPa or more, the resin compositions show excellent strength. Here, as the control test pieces when calculating the improving rate of the strain at break, a test piece made of a resin composition of Comparative Example 2-2 was used for Examples 2-1 to 2-4 and Comparative Examples 2-5 and 2-7, and a test piece of a resin composition of Comparative Example 2-4 was used for Examples 2-5 to 2-7 and Comparative Examples 2-6 and 2-8, respectively.

$$\text{Improving Rate of Strain at Break, } \% = (ES/EB) \times 100 \qquad (I)$$

ES: An average of tensile strains at break of five sample test pieces
EB: An average of tensile strains at break of five control test pieces

A control test piece refers to a test piece of a resin composition having a composition excluding only a compatibilizing agent from a sample resin composition.

$$\text{Improving Rate of Elastic Modulus, } \% = (MS/MB) \times 100 \qquad (II)$$

MS: An average of tensile moduli of five sample test pieces
MB: An average of tensile moduli of five blank test pieces

The blank test piece refers to a test piece of a resin composition without containing an additive.

Test Example 2-2 - Weld Strength

A resin composition obtained was injection-molded on the basis of ASTM D638 Type I in a thermostatic chamber held at 25°C, to produce a molded article. The resin composition was supplied from both terminal gates in cases of molded articles in which weld was generated, or the resin composition was supplied from one terminal gate in cases of molded articles in which weld was not generated, and 3 each of molded articles were produced for each of examples and comparative examples. The molded articles in which weld was generated were cut out, centering about a weld (central) part, into a size of an area of a cross section of 39 mm$^2$ and a length of 60 mm, and the molded articles in which weld was not generated were cut into a size of an area of a cross section of 39 mm$^2$ and a length of 60 mm, to provide each of test pieces.

For each of the test pieces, a bending test was carried out in the same manner as prescribed in JIS K 7171 with a span of 48 mm and a speed of 1 mm/sec to examine flexural strength, MPa, and flexural modulus, MPa, and a retention rate of weld strength was calculated by the following formula:

$$\text{Retention Rate of Weld Strength, } \% = \frac{\text{Flexural Strength, with Weld}}{\text{Flexural Strength, Without Weld}} \times 100$$

The higher the retention rate of the weld strength, %, the higher the weld strength, so that it can be said to be an excellent molded article.

Further, as the flexural modulus becomes higher, it can be judged that the initial oscillation of the vibrations is small, so that it can be said to be an excellent molded article having vibration-damping properties.

Test Example 2-3 - Impact Strength at Low Temperatures

Resin composition pellets obtained were injection-molded with an injection-molding machine J110AD-180H manufactured by The Japan Steel Works, Ltd., cylinder temperatures set at 6 locations, of which cylinder temperature was set at 200°C for the sections up to fifth units from the nozzle end side, at 180°C for the remaining one unit, and at 45°C for the section below the hopper, to mold into test pieces at a mold temperature set to 80°C, to provide a molded article of the resin composition.

A molded article having dimensions of 100 × 100 × 1.5 mm obtained by injection molding was allowed to stand overnight in a thermostat held at -10°C. Using a falling ball impact tester, a 1 kg pear-shaped weight was dropped from a given height, and a height at which the molded article was not broken apart twice in a row was defined as an impact strength at a low temperature.

As the height at which the molded article was not broken becomes higher, it can be said that the molded article is more excellent and has a higher impact strength at a low temperature.

Test Example 2-4 - Inhibition of Bowing

A molded article having dimensions of 100 × 100 × 1.5 mm obtained by injection-molding according to a method of Test Example 2-3 was allowed to stand overnight in a thermostatic chamber held at 25°C, and the bowing was obtained by the following formula:

$$\text{Bowing} = \text{Maximum Height} / \text{Diagonal Length}$$

With regard to a maximum height and a diagonal length of a molded article, as shown in FIG. 1, when a molded article is supposed as a hypotenuse of a right triangle, a shorter side of the two sides making a right angle is defined as a maximum height, and a longer side is defined as a diagonal length. As the bowing becomes smaller, it can be said that the molded article is more excellent and has small deformations.

[Table 3]

Table 3

| | | | | | Ex. | | | | | | | Comp. Ex. | | | | | | | |
|---|---|---|---|---|---|---|---|---|---|---|---|---|---|---|---|---|---|---|---|
| | | | | | 2-1 | 2-2 | 2-3 | 2-4 | 2-5 | 2-6 | 2-7 | 2-1 | 2-2 | 2-3 | 2-4 | 2-5 | 2-6 | 2-7 | 2-8 |
| Resins | Polyethylene | | | | 100 | 100 | 100 | 100 | - | - | - | 100 | 100 | - | - | 100 | - | 100 | - |
| | Polypropylene, EA9 | | | | - | - | - | - | 100 | 100 | 100 | - | - | 100 | 100 | - | 100 | - | 100 |
| Celluloses | Compatibilizing Agent | Content, Based on 100 Parts by Mass of Cellulose | Crystallinity Index Before Milling, % | Crystallinity Index After Milling, % | | | | | | | | | | | | | | | |
| | Umex 1001 | 50 | 82.0 | -2.6 | 25 | - | - | - | - | - | - | - | - | - | - | - | - | - | - |
| | Umex 1001 | 25 | 82.0 | 1.7 | - | 25 | - | - | - | - | - | - | - | - | - | - | - | - | - |
| | Umex 1001 | 17 | 82.0 | 17.7 | - | - | 25 | - | 25 | 25 | 25 | - | - | - | - | - | - | - | - |
| | BF-E | 25 | 82.0 | 4.5 | - | - | - | 25 | - | - | - | - | - | - | - | - | - | - | - |
| | Umex 1010 | 10 | -32.0 | -40.8 | - | - | - | - | - | - | - | - | - | - | - | 25 | 25 | - | - |
| | Stearic Acid | 2 | 82.0 | 63.5 | - | - | - | - | - | - | - | - | - | - | - | - | - | 25 | 25 |
| | KC FLOCK, Crystallinity Index: 78.5% | | | | - | - | - | - | - | - | - | - | 25 | - | 25 | - | - | - | - |
| Crystal Nucleating Agent | GEL ALL MDLM30G | | | | - | - | 1 | - | - | - | - | - | - | - | - | - | - | - | - |
| | NA-11 | | | | - | - | - | - | - | - | 1 | - | - | - | - | - | - | - | - |
| Kneading Temp. | °C | | | | 200 | 200 | 200 | 200 | 200 | 200 | 200 | 200 | 200 | 200 | 200 | 200 | 200 | 200 | 200 |
| Strain Tensile Strain at Break | % | | | | 410 | 810 | 480 | 720 | 8 | 8 | 8 | 1,200 | 294 | 800 | 4 | 40 | 3 | 94 | 4 |

EP 3 564 268 A1

(continued)

| | | Ex. | | | | | | | Comp. Ex. | | | | | | | |
|---|---|---|---|---|---|---|---|---|---|---|---|---|---|---|---|---|
| | | 2-1 | 2-2 | 2-3 | 2-4 | 2-5 | 2-6 | 2-7 | 2-1 | 2-2 | 2-3 | 2-4 | 2-5 | 2-6 | 2-7 | 2-8 |
| Resins | Polyethylene | 100 | 100 | 100 | 100 | - | - | - | 100 | 100 | - | - | 100 | - | 100 | - |
| | Polypropylene, EA9 | - | - | - | - | 100 | 100 | 100 | - | - | 100 | 100 | - | 100 | - | 100 |
| Strain at Break of Control Test Piece | % | 294 | 294 | 294 | 294 | 4 | 4 | 4 | - | 294 | - | 4 | 294 | 4 | 294 | 4 |
| Improving Rate of Tensile Strain at Break | % | 139 | 276 | 163 | 245 | 200 | 200 | 200 | - | 100 | - | 100 | 14 | 75 | 32 | 100 |
| Tensile Modulus | GPa | 1.61 | 1.64 | 1.60 | 1.60 | 2.35 | 2.67 | 2.65 | 0.46 | 1.23 | 1.37 | 1.77 | 0.85 | 1.57 | 1.00 | 1.73 |
| Elastic Modulus of Control Test Piece | GPa | 1.23 | 1.23 | 1.23 | 1.23 | 1.77 | 1.77 | 1.77 | - | 1.23 | - | 1.77 | 1.23 | 1.77 | 1.23 | 1.77 |
| Improving Rate of Tensile Modulus | % | 131 | 133 | 130 | 130 | 133 | 151 | 150 | - | 100 | - | 100 | 69 | 89 | 81 | 98 |

Here, the crystallinity index in the table refers to a cellulose I crystallinity index.

It can be seen from Table 3 that according to the comparisons between Examples and Comparative Examples, even when the constituting raw materials of the resin compositions were the same, Examples containing a cellulose composite in which a milling treatment is previously carried out with a polymer have higher rigidity, and are more excellent in toughness. In particular, Comparative Examples 2-5 and 2-6 correspond to amorphous cellulose I of Patent Publication 1 in the section of Background of the Invention, and it can be seen that Examples are remarkably higher in rigidity and more excellent also in toughness, as compared to these comparative examples.

[Table 4]

Table 4

| | | | | | Ex. | Comp. Ex. | | | | |
|---|---|---|---|---|---|---|---|---|---|---|
| | | | | | 2-8 | 2-9 | 2-10 | 2-11 | 2-12 | 2-13 |
| Resin | Polypropylene, MA3 | | | | 100 | 100 | 100 | 100 | 100 | 100 |
| Celluloses | Compatibilizing Agent | Content, Based on 100 Parts by Mass of Cellulose | Crystallinity Index Before Milling, % | Crystallinity Index After Milling, % | | | | | | |
| | Umex 1001 | 50 | 82 | -2.6 | - | - | - | - | - | - |
| | Umex 1001 | 25 | 82 | 1.7 | - | - | - | - | - | - |
| | Umex 1001 | 17 | 82 | 17.7 | 18.2 | - | - | - | - | - |
| | BF-E | 25 | 82 | 4.5 | - | - | - | - | - | - |
| | Umex 1010 | 10 | -32 | -40.8 | - | - | - | - | - | - |
| | Stearic Acid | 2 | 82 | 63.5 | - | - | - | - | - | - |
| | KC FLOCK, Crystallinity Index: 78.5% | | | | - | - | - | - | - | - |
| Inorganic Fillers | Talc | | | | - | - | 34.4 | 12.2 | - | - |
| | Glass Fibers | | | | - | - | - | - | 29.3 | 10.3 |
| Filler Volume Percent | vol% | | | | 10.3 | 0 | 10.3 | 3.9 | 10.3 | 3.4 |
| Kneading Temp. | °C | | | | 200 | 200 | 200 | 200 | 200 | 200 |
| Flexural Strength Without Weld | MPa | | | | 46 | 38 | 46 | 43 | 70 | 58 |
| Flexural Strength with Weld | MPa | | | | 40 | 36 | 27 | 34 | 38 | 38 |
| Retention Rate of Weld Strength | % | | | | 87 | 95 | 59 | 79 | 54 | 66 |
| Flexural Modulus Without Weld | GPa | | | | 2.2 | 1.5 | 3.3 | 2.2 | 3.5 | 1.8 |
| Flexural Modulus with Weld | GPa | | | | 2.4 | 1.7 | 3.8 | 2.4 | 6.0 | 2.4 |

(continued)

|  | | Ex. | Comp. Ex. | | | | |
|---|---|---|---|---|---|---|---|
|  | | 2-8 | 2-9 | 2-10 | 2-11 | 2-12 | 2-13 |
| Resin | Polypropylene, MA3 | 100 | 100 | 100 | 100 | 100 | 100 |
| Impact Strength at Low-Temp. | cm | >130 | >130 | - | >130 | - | 75 |
| Bowing | - | 0.04 | 0.01 | 0.01 | 0.03 | 0.16 | 0.11 |

It can be seen from Table 4 that according to the comparisons between Examples and Comparative Examples, Examples containing a cellulose composite in which a milling treatment is previously carried out with a polymer are excellent in weld strength, impact strength at low temperatures, and inhibition of bowing.

INDUSTRIAL APPLICABILITY

The cellulose-containing powder obtainable by the method of the present invention can be suitably used in various industrial applications such as daily sundries, household electric appliance parts, and automobile parts.
Further, the cellulose obtainable by the method of the present invention can be suitably used in various industrial applications such as daily sundries, household electric appliance parts, and automobile parts.

EXPLANATION OF NUMERALS

A    Maximum height
D    Diagonal length

**Claims**

1. A method for producing a cellulose-containing powder having a cellulose I crystallinity index of -20% or more and less than 50%, comprising adding, to 100 parts by mass of cellulose-containing raw materials having a cellulose I crystallinity index of 10% or more and less than 100%, 0.1 parts by mass or more and 100 parts by mass or less of one or more additives selected from the group consisting of the following (A), (B), and (C):

   (A) high-molecular weight compounds having acid anhydrides,
   (B) low-molecular weight compounds having acid anhydrides, and
   (C) silane coupling agents; and subjecting a mixture to a milling treatment in a dry state.

2. The method according to claim 1, wherein the additive is one or members selected from the group consisting of (A) and (C).

3. The method according to claim 1 or 2, wherein the milling treatment in a dry state is carried out with a media mill.

4. The method according to any one of claims 1 to 3, wherein the proportion of particles having particle sizes of 32 μm or less, in the entire cellulose-containing powders produced, is 10% by volume or less.

5. The method according to any one of claims 1 to 4, wherein the cellulose I crystallinity index of the cellulose-containing raw materials is 50% or more.

6. The method according to any one of claims 1 to 5, wherein the proportion of particles having particle sizes of exceeding 32 μm and 250 μm or less, in the entire cellulose-containing powders produced, is 40% by volume or more.

7. The method according to any one of claims 1 to 6, wherein the compound (A) is a maleic anhydride-modified polyolefin.

8. The method according to any one of claims 1 to 7, wherein the compound (B) is one or more members selected from alkylsuccinic or alkenylsuccinic anhydride and alkylglutaric or alkenylglutaric anhydride.

9. The method according to any one of claims 1 to 8, wherein the compound (C) is one or more members selected from isocyanate silanes, amino silanes, mercapto silanes, and epoxy silanes.

10. A cellulose-containing powder having a cellulose I crystallinity index of -20% or more and less than 50%, wherein the cellulose-containing powder comprises, based on 100 parts by mass of cellulose-containing raw materials, 0.1 parts by mass or more and 100 parts by mass or less of one or more additives selected from the group consisting of the following (A), (B), and (C):

   (A) high-molecular weight compounds having acid anhydrides,

(B) low-molecular weight compounds having acid anhydrides, and
(C) silane coupling agents.

11. The cellulose-containing powder according to claim 10, wherein the proportion of particles having particle sizes of 32 μm or less, in the entire cellulose-containing powders, is 10% by volume or less.

12. The method according to claim 10 or 11, wherein the proportion of particles having particle sizes of exceeding 32 μm and 250 μm or less, in the entire cellulose-containing powders, is 40% by volume or more.

13. A thermoplastic resin composition comprising
a thermoplastic resin (a), and
a cellulose composite (b), which is a mixed and milled product of a polymer having a cellulose-affinity site and a cellulose, the cellulose composite having a cellulose I crystallinity index of -20% or more and less than 50%.

14. The resin composition according to claim 13, wherein the weight-average molecular weight Mw of the polymer having a cellulose-affinity site is 5,000 or more and 500,000 or less.

15. The resin composition according to claim 13 or 14, wherein the cellulose affinity site is at least one functional group selected from the group consisting of an acid anhydride group, a carboxyl group, an amino group, an imino group, an alkoxysilyl group, a silanol group, a silyl ether group, a hydroxyl group, and an epoxy group.

16. The resin composition according to any one of claims 13 to 15, wherein the cellulose composite (b) is a cellulose-containing powder produced by a method as defined in any one of claims 1 to 9.

17. The resin composition according to any one of claims 13 to 15, wherein the cellulose composite (b) is a cellulose-containing powder as defined in any one of claims 10 to 12.

18. The resin composition according to any one of claims 13 to 17, wherein the content of the cellulose composite (b) in the resin composition is 5 parts by mass or more and 70 parts by mass or less, based on 100 parts by mass of the thermoplastic resin (a).

19. A molded article comprising a resin composition as defined in any one of claims 13 to 18.

20. A method for producing a molded article, including processing a resin composition as defined in any one of claims 13 to 18 to produce a molded article.

21. A method for producing a resin composition, comprising blending a thermoplastic resin (a), and
a cellulose composite (b) having a cellulose I crystallinity index of -20% or more and less than 50%, in which

a polymer having a cellulose affinity site and
a cellulose
are previously subjected to a milling treatment.

[FIG. 1]

**FIG. 1**

## INTERNATIONAL SEARCH REPORT

| International application No. |
|---|
| PCT/JP2017/046413 |

| A. CLASSIFICATION OF SUBJECT MATTER |
|---|
| Int.Cl. C08B1/00(2006.01)i, C08J3/12(2006.01)i, C08K5/092(2006.01)i, C08K5/54(2006.01)i, C08L1/02(2006.01)i, C08L23/26(2006.01)i, C08L101/00(2006.01)i |
| According to International Patent Classification (IPC) or to both national classification and IPC |

| B. FIELDS SEARCHED |
|---|
| Minimum documentation searched (classification system followed by classification symbols) |
| Int.Cl. C08B1/00, C08J3/12, C08K5/092, C08K5/54, C08L1/02, C08L23/26, C08L101/00 |

| Documentation searched other than minimum documentation to the extent that such documents are included in the fields searched |
|---|
| Published examined utility model applications of Japan 1922-1996 |
| Published unexamined utility model applications of Japan 1971-2018 |
| Registered utility model specifications of Japan 1996-2018 |
| Published registered utility model applications of Japan 1994-2018 |

| Electronic data base consulted during the international search (name of data base and, where practicable, search terms used) |
|---|
| JSTPlus/JMEDPlus/JST7580(JDreamIII) |

| C. DOCUMENTS CONSIDERED TO BE RELEVANT | | |
|---|---|---|
| Category* | Citation of document, with indication, where appropriate, of the relevant passages | Relevant to claim No. |
| X<br>A | JP 2011-137094 A (KAO CORPORATION) 14 July 2011, claims, paragraphs [0199], [0204], [0215], production examples 18-23, examples 42-50<br>(Family: none) | 1-6, 9-21<br>7-8 |
| X<br>A | JP 2011-153297 A (KAO CORPORATION) 11 August 2011, claims, paragraphs [0223], [0228], production examples 17-22<br>(Family: none) | 1-6, 9-12<br>7-8, 13-21 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 February 2018 | 20 February 2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.

PCT/JP2017/046413

C (Continuation).    DOCUMENTS CONSIDERED TO BE RELEVANT

| Category* | Citation of document, with indication, where appropriate, of the relevant passages | Relevant to claim No. |
|---|---|---|
| X<br>A | JP 2011-152786 A (KAO CORPORATION) 11 August 2011,<br>claims, paragraphs [0218], [0223], production examples<br>17-22<br>(Family: none) | 1-6, 9-12<br>7-8, 13-21 |
| A | JP 2015-155535 A (NISHIOKA, Akihiro) 27 August 2015,<br>claims, paragraphs [0061]-[0066], example 1<br>(Family: none) | 1-21 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011137094 A
- JP 2010155982 A
- JP 2010037526 A
- JP 2004231796 A